(19) **Europäisches Patentamt**
**European Patent Office**
**Office européen des brevets**

(11) **EP 3 081 279 A1**

(12) **EUROPEAN PATENT APPLICATION**
published in accordance with Art. 153(4) EPC

(43) Date of publication:
**19.10.2016 Bulletin 2016/42**

(21) Application number: **14869463.1**

(22) Date of filing: **26.11.2014**

(51) Int Cl.:
**B01D 46/00** (2006.01)    **B01D 50/00** (2006.01)
**F24F 13/28** (2006.01)    **F24F 1/02** (2006.01)
**F24F 3/16** (2006.01)    **A61L 9/22** (2006.01)

(86) International application number:
**PCT/CN2014/092242**

(87) International publication number:
**WO 2015/085864 (18.06.2015 Gazette 2015/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.12.2013 CN 201320807732 U**
**28.02.2014 HK 14101954**
**01.07.2014 CN 201410311260**
**04.08.2014 CN 201420436241 U**
**05.09.2014 HK 14109045**

(71) Applicant: **Law, Sui Chun**
**Hong Kong 999077 (CN)**

(72) Inventor: **Law, Sui Chun**
**Hong Kong 999077 (CN)**

(74) Representative: **Becker Kurig Straus**
**Patentanwälte**
**Bavariastrasse 7**
**80336 München (DE)**

(54) **AIR PURIFICATION APPARATUS AND METHOD**

(57)    An air purification apparatus and air purification method is disclosed. Air to be purified is drawn into an air purification unit for purification by a negative pressure, wherein the negative pressure region is created by a fan blower, and the air to be purified does not pass through the fan blower to prevent the fan blower being contaminated by the pollutants which presented in the air to be purified. With the present invention, the lifespan of the fan blower can be extended, and the fire alarm risk caused by accumulated pollutants can be decreased. The fan blowers with lower power consumption can be used to achieve the beneficial effects of energy saving and noise reduction.

Figure 3

## Description

## TECHNICAL FIELD

The present invention relates to the field of environmental protection, in particular relates to an apparatus for air purification, and more particularly, relates to an air filter can be applied to machines, vacuum cleaners, kitchen range hood and other air cleaning devices and methods.

## BACKGROUND

Air pollutants are mainly divided into two forms: one forms of it is the particulates such as dust, bacteria, fungi and other larger shapes, the molecular structure of them is complicated, which comprises of a variety of different materials or ingredients from the size of about one hundredth of one -micron to several hundred microns. Another forms of it is the gases such as odors, volatile organic compounds and other chemical elements, it has simple chemical structure, composed of several kinds of chemical elements, they are small in size, which only up to the scale of nanometers.

To remove the particulate contaminants in the air, it can be done usually by different filtration technologies. One of the conventional method is to filter the air by paper-type filter. High efficiency filter paper (such as HEPA Filter) to remove the particulate type air pollutants may even be used. There is also method employing of an high-voltage electrostatic precipitator, which negative ions is released to charge up the suspended dust particulates in the air to negatively charged particulates, then allowed them to be collected when they approaches the relatively less negative, more neutral or positive charged components.

In order to treat different type of air pollutants, the air purifiers available in the market tend to employ more than one method of air purification and filtration technologies. The filter (or the filters) and the fan being used are usually arranged in a series manner, namely "filter and fan are arranged in series as layer by layer manner", wherein, an exhaust fan or a fan blower is employed to drive the air to flow from the upstream to the downstream of the device.

The arrangement method of "Filter and fan are arranged in series as layer by layer manner" leads to the problem of higher airflow resistance, high fan power consumption. When the filter having more particulate pollutants being adsorbed on its surface, it will further increase the static pressure and reduce the air flow passing through the air purifying device.

The arrangement method of "Filter and fan are arranged in series as layer by layer manner" also causes another problem. Unless the high power type fan is used in combination with a high static pressure filter where a single way of airflow (single air path) when can achieve very good filtering effect, most general filter cannot completely purified the contaminants from the air stream, the unremoved contaminants which left in the air stream will attach to the fan, they will make the air fan blower and fan motor become dirty and weakened its life. For example, if the kitchen range hood utilizing this filter-and-fan-layer-by-layer-in-series arrangement method, due to the reason that the temperature drop in the downstream position, the gases phase pollutants at the upstream position, which cannot be caught by the oil grease removal filter, being condensed and become particulates phase pollutant at the downstream position, the condensed particulates phase pollutants then attach to the fan motor or the fan at the downstream position, apart from damaging the fan's life, it will also cause a fire hazard.

## SUMMARY OF INVENTION

To solve the above problems, the present invention provides an apparatus and method for purifying air, a non-traditional design of "filter and fan are arranged parallel in same level" is employed to effectively removal of particulate contaminants in the air stream. The user will not need to replace the filter. The secondary pollution will also be removed. Fan with high power consumption will not be a necessity in the air purifying device of the present invention. This is because the static pressure produced by the air purifying apparatus and method in the present invention is low in comparing with the traditional method which the "Filter and fan are arranged in series as layer by layer manner". With the air purifying device as stated the present invention, even if there are some un-filtered contaminants, which cannot be removed by the filter in the air purifying device, they will not be attracted to the fan. Thus, the life of fan is being extended. In any case, the apparatus and method for purifying air in the present invention, can also be used as a high efficient apparatus and method for removing the particulate pollutants from the cooking fume in the kitchen range hood, When the gas type pollutants in the cooking fume, which exist at the upstream position become condense to particulates phase pollutant when they come to the downstream position, due to the dropping of the temperature, they are also easily be captured by the method as stated in the present invention. The present invention allows the emitted oil cooking fumes which are in gas type pollutants be timely be converted to particulates type pollutants which is larger in size, and be separated from the air stream in timely effectively.

An air purifying device, comprises:

at least one fan blower, the operation of the fan blower generates a first airflow;

at least one first airflow duct, the first airflow duct having a first air inlet, the first airflow in the first airflow duct flows from upstream to downstream;

at least one second airflow duct, the second airflow duct having a second air inlet, the second airflow flows from the upstream position to the downstream position at the second airflow duct; at one downstream position of the second airflow duct, the second airflow duct and first airflow duct merge together; the first airflow is flowing through the merging point of the of the first airflow duct and the second airflow duct, a negative pressure region in the second airflow duct is created; this makes the second airflow to be flown out from the second airflow duct and combines with the first airflow and forms a third airflow; and

at least one air purifying component being disposed at second airflow duct, and / or the airflow path of the third airflow, purifying the second airflow and/or the third airflow.

In one embodiment, the first airflow duct and the second airflow duct located at the upstream of the position of the air purifying device. The air from different sources are independently being drawn to the first airflow duct and the second airflow duct through the first air inlet and the second air inlet, acting as the first airflow and the second airflow.

In one embodiment, the first air inlet and the second air inlet draw in airflows of different temperatures. Further, the airflow being drawn into the first air inlet is of relatively lower temperature as compared to the airflow being drawn into the second air inlet.

In one embodiment, the airflows being drawn into first air inlet and the second air inlet are airflows of different levels of air pollutants. Further, the airflow being drawn into the first air inlet is of relatively lower levels of particulates phase and/or gases phase pollutants, compared to the airflow being drawn into the second air inlet.

In one embodiment, a whole or a partial amount of the gases phase pollutants in the second airflow, which being drawn into the second air inlet, will be converted to or be condensed into particulates phase pollutant upon the drop of temperature.

In one embodiment, the temperature of the airflow at the upstream position of the air purifying device is higher than that at the downstream of the air purifying device.

In one embodiment, the air purifying device further comprises at least one common airflow duct, the common airflow duct having a common air outlet, the common airflow duct located at the downstream position which is after the merging of the first airflow duct and the second airflow duct. The third airflow flows within the common airflow duct, and being discharged out through the common air outlet.

In one embodiment, the air purifying component is any one or more than one of the following components, in order to purify or reduce for the levels of pollutants in the second airflow and/or the third airflow: high voltage electrostatic precipitator, a filter, a filter components, centrifugal device and cyclone separator.

In one embodiment, the air purifying device further comprises a contaminant collection tank, the contaminant collection tank is equipped in any position in the air purifying device. The contaminant collection tank collects the larger dimension particulates phase pollutants which were formed from the condensation of the gases phase pollutant or tiny size particulates phase pollutant upon the dropping of the temperature.

In one embodiment, the contaminant collection tank is equipped within the air purifying component.

In one embodiment, the air purifying device comprise multiple units of cyclone separators being connected together in a series manner, the connection method is that an air outlet of one cyclone separator is connected to an air inlet of another cyclone separator, wherein, the air inlet of the cyclone separator at the most upstream position and the air outlet of the cyclone separator at the most downstream position, or the air outlet of the cyclone separator at the most upstream position and the air inlet of the cyclone separator at the most downstream position, are equipped at or are connected to the second airflow duct and/or the airflow path of the third airflow. The multiple units of cyclone separators purify the second airflow and/or the third airflow.

In one embodiment, the air purifying device further comprises at least one ultrasonic nebulizer and water reservoir tank, the ultrasonic nebulizer is placed within the water reservoir tank, when the ultrasonic nebulizer is in operation, some atomized water vapor with relatively lower temperature is generated; the atomized water vapor is introduced into and combine with the first airflow, or the second airflow before they flows into the air purifying component, or the third airflow before it flows into the air purifying component.

In one embodiment, the air purifying device further comprises at least one pre-cooling device, the pre-cooling device is installed at any location upstream of the air purifying component and downstream of the second air inlet.

In one embodiment, at least one air purifying component cooling device is further comprised, the air purifying component cooling device surrounds the air purifying component, when the air is flown through the air purifying component, and the temperature of the airflow is decreased.

In one embodiment, wherein in the air purifying component comprises single or multiple units of cyclone separators in a series connection and air purifying component cooling device. The air purifying component cooling device which is disposed within the contaminant collection tank of the cyclone separator, it lower down the temperature of the airflow which entering into the contaminant collection tank, wherein fine particulates pollutants will be coagulated or be condensed at the lower temperature, and they are then collected by the contaminant collection tank of the cyclone separator.

In one embodiment, the pre-cooling device, or the cooling device of the air purifying component is any device of a thermoelectric cooling module, or a semiconductor type cooling chip, or a water condenser.

In one embodiment, wherein the second air inlet is connected to a range hood connected to the second air inlet, the range hood concentrates to draw in the second airflow, which is to be purified.

In one embodiment, it further comprises an ion generator, the ion generator comprises an electronic means and an ion releasing tip, the ion releasing tip is placed upstream of the air purifying component.

In one embodiment, if the air purifying device comprises a single unit of cyclone separator or multiple units of cyclone separators connected together in a series manner, the ion releasing tip is placed upstream of contaminant collection tank of the cyclone separator.

In one embodiment, if at least an ultrasonic nebulizer and water reservoir tank is further comprised, the ion releasing tip is placed at the downstream position of the ultrasonic nebulizer and the water reservoir tank, and at the upstream position of the air purifying component; the atomized water vapor combines with the first airflow, or combines with the second airflow prior to the entering of the air purifying component, or combines with the third airflow prior to the entering of the air purifying component. The dust particulates are charged before they enter into the air purifying component.

In one embodiment, the ion releasing tip is placed in the path of the first airflow.

In one embodiment, the ion releasing tip is placed non-uniformly in the path of the first airflow that makes only a partial portion of the first airflow contains ionized air and/or containing the charged particulates.

In one embodiment, it further comprises an air mixing space, one end of the air mixing space connected with the air purifying component; another end of the air mixing space, connected with the first air inlet through the fan blower. The air mixing space is located at a position between the fan blower and the air purifying component.

In one embodiment, the air purifying component is a filter component, a filter component comprises a filter frame and filtering materials, the upstream side of the filter frame is connected to a electrical conducting frame, the electrical conducting frame is connected to the ground wire of the electronic means of the ion generator; or the filter frame of the filter component is a conductive frame.

In one embodiment, the fan blower is installed at the upstream position of the ion releasing tip, the filter component is installed at the downstream position of the ion release tip.

In one embodiment, the ion release tip is placed at the outlet of the fan blower, which is being placed closed to one side of the cross-section of the fan blower outlet.

In one embodiment, ion releasing tip is placed within the air mixing space where it is a junction region of the laminar or turbulent airflow located within the air mixing space, and/or a junction region of the laminar or turbulent airflow located within the air mixing space.

In one embodiment, the ion releasing tip is placed within the air mixing space, near to the adjacent side of the fan blower outlet, and closed to one side of that cross-section.

In one embodiment, the first airflow duct forms a first chamber, the first airflow duct having a first air outlet, the first air outlet located at anywhere downstream of the first chamber.

The second airflow duct forms a second chamber, the second airflow duct has a second air outlet, the second air inlet located within the first chamber, and between the first air inlet and the first air outlet , the second air inlet draw-in air directly from the first chamber;

The air purifying component comprises at least one primary filter, the primary filter is placed within the second chamber, and purify of all air flow into the second chamber.

In one embodiment, the second chamber is also equipped with at least one third air inlet, which can directly draw in air from the outside of the first chamber.

In one embodiment, the air purifying device comprises a by-pass mechanism for selecting if airflow to be drawn into the second chamber will be all come from the second air inlet, or all come from the third air inlet, or in partially come from the second air inlet and partially come from the third air inlet.

In one embodiment, the primary filter is placed in between the second air inlet, the third air inlet and the second air outlet; or there are at least two primary filters, placing at the second air inlet and the third air inlet respectively, all air that incoming to and effluence from the second chamber will pass through the primary filter.

In one embodiment, a partial of or a whole of the primary filter forming the second chamber, the air inlet side of the primary filter will be according to where the airflow coming from, whether it is from the first chamber or from the outside of the first chamber, be defined as the second air inlet or third air inlet; the support of the filtering materials of the primary filter formed a shape as an air outlet, and that will be regarded as the second air outlet.

In one embodiment, the air inlet side of the primary filter, relative to the direction of flow of the first airflow, forming an acute angle.

In one embodiment, the air inlet side of the primary filter, parallel to the direction of flow of the first airflow.

In one embodiment, the first outlet and the second outlet are a shaped as a gradually narrowing air outlet.

When one embodiment, a partial portion of the housing outside of the first air outlet having a curve-shaped flowing line surface. When the airflow is exhausted from the first air outlet, the exhausted airflow passes by the curve-shaped flowing line surface, it will be attached to the wall of it while flowing. The pressure outside of the exhausted airflow is higher in compared to the pressure at the within the airflow and the pressure of the airflow at the junction with the curve-shaped flowing line surface.

In one embodiment, further comprises a flow deflector, the deflector is placed in the first chamber, when airflow is drawn to flow from the upstream to downstream, the flow deflector guides the airflow to the direction of the first air outlet.

In one embodiment, the flow deflector employs the high-voltage electrostatic precipitator having a function for dust removal.

In one embodiment, it further comprises a pre-filter, the pre-filter is installed at downstream position of the first air inlet, and upstream position of the second air inlet.

The static pressure of the pre-filter is 120Pa or less.

In one embodiment, the static pressure of the pre-filter is 40Pa or less.

In one embodiment, the first airflow duct forms a main airflow system, the main airflow system comprises a first air inlet and a first air outlet, the main airflow system further comprises a first chamber, which is defined by the void between the first air inlet and the first air outlet. The first air outlet is located at any position downstream of the first chamber. At least one fan blower is employed to drive a main airflow, being defined as a first airflow, flowing from the upstream position to the downstream position within the first chamber, from the first air inlet to the first air outlet, and be exhausted out from the first air outlet.

The second airflow duct forms a side airflow system, the side airflow system comprises at least one housing, at least one second air inlet, at least one second air outlet, and at least one second chamber, the second air inlet being located at the most upstream of the housing, the second outlet located at the most downstream position of the housing.

The air purifying component comprises at least one primary filter, the primary filter is installed within the housing of the side airflow system, for purifying all the air which enters into the second chamber though the second air inlet. The primary filter is located at downstream position of the second air inlet, the second chamber is located at a position between the primary filter and the second air outlet.

The second air outlet of the side airflow system is located at a position which is adjacent to the first air outlet of the main airflow system, or slightly forward or slightly at a location upstream of the adjacent of the first air outlet.

In one embodiment, the primary airflow system is an electrical device which contains fan, the air inlet of the electrical device is defined as the first air inlet, the air outlet of the electrical device is defined as the first air outlet, and the airflow exhausted from the first air outlet is defined as the first airflow.

In one embodiment, the electrical device is an electrical fan, a dehumidifier, a humidifier, a cool machine, an air conditioner or a heater having a fan.

In one embodiment, the main airflow system further comprises at least one main airflow concentrator, the airflow concentrator is a device to collects and concentrates the first airflow, when the first airflow is discharged from the electrical device, it will first flow into the airflow concentrator, the first airflow is converted and reforms to a high-speed first airflow.

In one embodiment, the housing of the side airflow system comprises a hollow annular housing portion and a primary filter carrying portion, the hollow annular housing portion further comprises the second air outlet, the second air outlet is a gradually narrowing shaped-type outlet, or a nozzle-type outlet.

In one embodiment, the hollow annular housing portion comprises a curved shape portion, having the curvature at the side facing to the hollow circular core. When the second airflow is exhausted from the second air outlet, the effluent flows out from the void within hollow annular housing portion, a Coanda effect is created at the curved shape portion by exhausting second airflow, which towing the air outside the air purifying device and those air nearby the hollow annular housing portion, to flows through a central hollow part of the hollow annular housing portion together with the second airflow.

In one embodiment, the main airflow system comprises a hollow annular housing portion. It is operated in coordination with the hollow annular housing portion of the second air flow system. The second air outlet surrounds a whole or a partial part of the first air outlet; or the first air outlet surrounds the whole or a partial part of the second air outlet. When the first airflow is exhausted from the first air outlet, it will pass by the central hollow part of the hollow annular portion of the second airflow system.

In one embodiment, there are two or more than two side airflow systems.

In one embodiment, the primary filter carrying portion is forms by a flexible duct tubing, the position of the second air inlet, can be extended to or shortened, or transferred for a different orientation.

In one embodiment, the shape of the primary filter is a standard shaped filter.

In one embodiment, at a face velocity of the airflow is 5.33 cm/s, it is an airflow resistance of the filter is 40Pa or more.

In one embodiment, at a face velocity of the airflow is 5.33 cm/s, it is an airflow resistance of the filter is 25Pa or more.

In one embodiment, at a face velocity of the airflow is 5.33 cm/s, it is an airflow resistance of the filter is 17Pa or more.

An air purifying device utilizing an air purifying method, wherein the first airflow being drawn in and flow through the first airflow duct by a fan blower. When the first airflow flowing within the first air flow duct, it passes by a merging point where the first and the second airflow ducts were joined together, a negative pressure region is then induced at the second airflow duct; the second airflow is further induced and it is drawn to flow out from the second airflow duct, to merge with the first airflow, forming a third airflow. An air purifying component is equipped at the second airflow duct, and/or the airflow path of the third airflow, to purify the second airflow and/or the third airflow.

In one embodiment, with the non-uniform arrangement of the ion generator within the first airflow duct, only partial of the airflow becomes ionized and/or contains charged particulates.

Compared with the prior art, the air purifying system and method of the present invention utilize "filter and fan are arranged parallel in same level" "design. The air to be purified will not pass through the fan blower. A negative pressure region is created by the fan blower, the air to be purified is in-taken into the air purifying component by a vacuum suction action. Therefore, the unfiltered contaminants from the air purifying component will not be attract to adhere onto the fan blower, the fan blower's life is extended. When this is applied to a kitchen range hood, the fan blower of the air purifying device will not be docked with the particulates soot even with long term using, which would otherwise cause a fire hazard. Furthermore, since the fan blower will not be used to directly drive the air which are to be cleaned, even when filter of high-density or high static pressure is applied, it is not necessary that a high-torque fan blower must also be used, the result of energy saving and the effect of noise reduction can be achieved.

BRIEF DESCRIPTION

Figure 1 illustrates the first example of an embodiment of the present invention, the air purifying component is placed in the second airflow duct, purifying the second airflow.

Figure 2 illustrates the second example of an embodiment of the present invention, the air purifying component is placed in the common airflow duct, purifying the third airflow.

Figure 3 illustrates the third example of an embodiment of the present invention, the air purifying device further comprises at least one pre-cooling device and the ion generator.

Figure 4 illustrates the fourth example of an embodiment of the present invention, the air purifying component is placed in the second airflow duct and the common duct airflow, purifying the second airflow and the third airflow.

Figure 5 illustrates the fifth example of an embodiment of the present invention, the air purifying component is a cyclone separator, and the air purifying component is placed at the common airflow duct, purifying the third airflow.

Figure 6a illustrates the sixth-a example of an embodiment of the present invention, the air purifying component is a cyclone separator, and the air purifying component is placed at the second airflow duct, purifying the second airflow.

Figure 6b illustrates the sixth-b example of an embodiment of the present invention, wherein further comprises a second airflow duct and a third airflow duct.

Figure 7 illustrates the seventh example of an embodiment of the present invention, different way of merging the first airflow duct and the second airflow duct is described.

Figure 8a illustrates the eighth example of an embodiment of the present invention which showing a cross section diagram.

Figure 8b illustrates the perspective view of the eighth example of the embodiment of the present invention

Figure 9 illustrates the seventh example of an embodiment of the present invention, another way of merging the first airflow duct and the second airflow duct is described.

Figures 10 and 11 respectively illustrates the tenth and eleventh examples of an embodiments of the present invention, the other forms of the first airflow and the second airflow.

Figure 12 illustrates the twelve example of an embodiment of the present invention as one implementation figure.

Figure 13 illustrates the thirteenth example of an embodiment of the present invention as one implementation figure.

Figure 14 illustrates the fourteenth example of an embodiment of the present invention as one implementation figure.

Figure 15 is a side view of figure 14.

Figure 16 is a structural diagram of an embodiment of the filter shown in Figure 14.

Figures 17-23 illustrates 14 different variants of the embodiment of the present invention.

Figures 24-26 illustrate other variations of the embodiment of the present invention.

Figure 27 is a comparison between the illustration examples of Figure 24 and Figure 25 on the dust removal efficiency on (1) operating of the ion generator (2) without operating of the ion generator.

Figure 28 is comparison on the dust removal efficiency of when placing the ion releasing tip of ion generator at different locations.

Figure 29 is a schematic diagram of the present invention on an air purifying method.

## DETAILED DESCRIPTION

To make the above-mentioned objectives characteristic features and the advantages of the present invention be more easily to be understood, the following are some detailed description of the embodiments of the present invention. The following description contains numerous specific details in order to enable the present invention to be fully understood. However, the present invention can be implemented in many other ways, other than those described herein. The person of original skill in the art can make similar improvements without departing from the connotation of the invention. The Invention is not limited by the following disclosed specific embodiments.

It should be noted that, when an element is referred to as "is placed" on another element, it can be directly on another element or it can be located within another elements. When an element is considered to be "connected" to another element, it can be directly connected to another element or simultaneously, it may be presented as it is situated within another element.

Unless otherwise defined, all of the technical and scientific terms stated in the present invention, same meaning to that commonly understood by the person of ordinary skill in the art. The term used in the present invention as described herein is only some examples for the purpose of describing particular embodiments, it is not in any intention to limit the invention. As used herein, the term "and / or" includes any one or more of the associated listed items and all combinations.

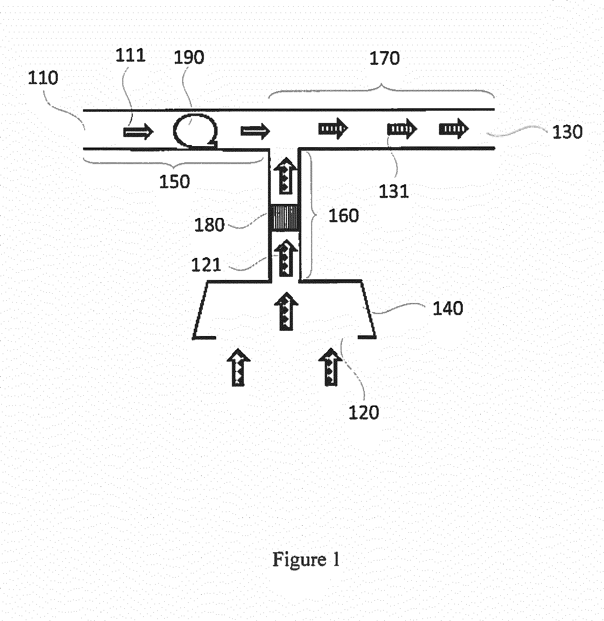

As illustrated in the Figure 1, the air purifying device of the present invention comprises a fan blower 190, the operation of the fan blower 190 generate a first airflow 111; a first air inlet 110; a second air inlet 120; a first airflow duct 150; a second airflow duct 160; a common airflow duct 170; a common outlet 130; an air purifying component 180; the air purifying component 180 is disposed in the second airflow duct 160, purifies the second airflow 121.

Wherein the first airflow duct 150 and the second airflow duct 160 is placed at the upstream position of the air purifying component 180, they independently drawn in the different sources of air streams, i.e., a first airflow 111 and the second airflow 121. The first airflow 111 and the second airflow 111 flow within the first airflow duct 150 and the second airflow duct 160 respectively. The first airflow duct 150 and the second airflow duct 160 of the air purifying device are incorporated or connected together at the downstream position of the air purifying device, become common airflow duct 170. The combined airflow, i.e., the third airflow 131, is exhausted.

In one embodiment, the first air inlet 110 and second air inlet 120 drawn into the air with different temperatures. Further, the first airflow 111 being drawn in from the air inlet 110 has a lower temperature comparing to that of the second air airflow 121 which being drawn in from the second air inlet 120.

In one embodiment, the first air inlet 110 and second air inlet 120 drawn into the air with different level of air pollutants. Further, the first airflow 111 being drawn in from the air inlet 110 has less particulates type and/or gases type pollutants comparing to that of the second air airflow 121 which being drawn in from the second air inlet 120.

In one embodiment, all level or partial level of the gaseous forms pollutants in the second airflow 121, which being drawn into the second air inlet 120 will be converted to particulate type pollutants by coagulation upon the drop of temperature.

In one embodiment, the temperature of the airflow at the upstream position of the air purifying device is higher than that at the downstream position.

The first air inlet 110 is connected to the fan blower 190, the first airflow 111 is being drawn through the air inlet 110 by the fan blower 190 into the air purifying device. The first airflow 111 to flow through the first airflow duct 150, and also flow through the merging point which the first airflow duct 150 and the second airflow duct 160 combined or connected. The first airflow 111 tows the second airflow 121, and merges with the second airflow 121 forming a third airflow 131, and enters to the common airflow duct 170. The first airflow 111 passes through the merging point of the ducts, will form a negative air pressure region in the second airflow duct 160, and then the second air stream 121 will be induced to be drawn into the second airflow duct 160 through the second air inlet 120. The second air inlet 120 is connected to a suction hood 140. When the second airflow 121 is drawn into the second airflow duct 160, it will also pass through the air purifying component 180, a second airflow 121 is purified by the air purifying component 180, the first airflow 111 and the second airflow 121 merges together and form the third airflow 131 at the relatively downstream location, and flows within common airflow duct 170. The third airflow 131 exhaust at the common air outlet 131 at the terminal of the common airflow duct 170.

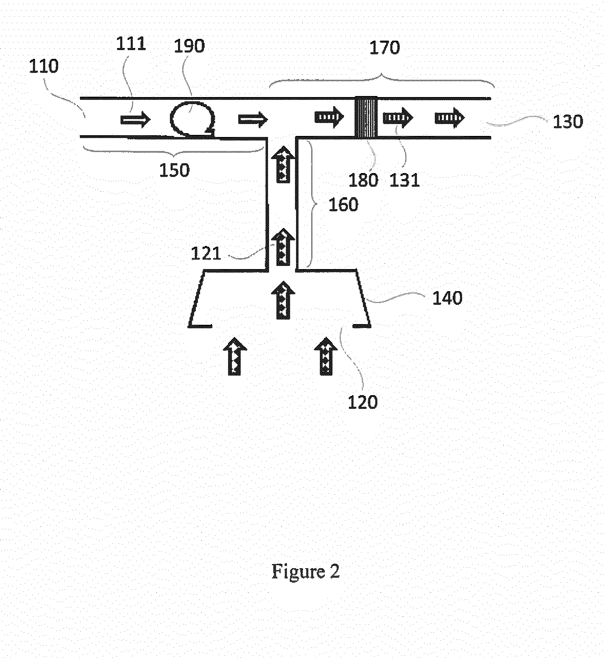

Figure 2 shows the second example of an embodiment of the present invention, it is structurally similar to the example 1, and excepting the air purifying component 180 is placed at the common airflow duct 170 and purifies the third airflow 131.

Wherein, the first airflow 111 contains cleaned air. At least, compared to the second airflow 121 which has not yet be purified by the air purifying component 180, and/or the third airflow 131 which has not yet been purified by the air purifying component 180, the first airflow 111comprises fewer air pollutants. The second airflow 121 is the air containing contaminants and waiting to be purified.

Further, the contaminants refer to particulate type pollutants.

Further, at higher temperature, the second airflow 121 contains relatively higher concentrations of gases type pollutants or fine particulate type pollutants; at lower temperature, the gases type pollutant is converted to fine particulate type pollutants, or fine particulate type pollutants is coagulated to larger size particulate type pollutants.

In some embodiments, the air purifying device further comprises at least an ultrasonic nebulizer and water reservoir tank, the ultrasonic nebulizer is placed within the water reservoir tank. When the ultrasonic nebulizer is in operation, it produces small mist or atomized water vapor which has lower temperature compared to that of the pollutants in the air.

The small mist or atomized water vapor is pumped to, or be directed by a pipe to the airflow which not yet been purified; they are the first airflow 111, the second airflow 121 which before it is entering to the air purifying component 180, or the third airflow 131 which before it is entering to the air purifying component 180.

When the small mist which is of lower temperature being mixed with the airflow which contains the gases type pollutants and the particulate type pollutant, it will reduce the temperature of that airflow. This device is particularly suitable for apply to remove certain contaminants which comprising the gases type pollutants, and will condenses into particulate type pollutants upon the drop of temperature, such as odor or fumes type contaminants that being produced during cooking. As most of contaminants in the airflow are in the form of gaseous phase, on when the tiny mist reducing the temperature of the airflow, the oil pollutant that original exist as gases phase pollutants in the cooking fume will condense to form the larger size particulate type pollutants. As the same time, the fine particulate type pollutant in the cooking fume will also collide with the tiny mist, and further coagulated and increase their sizes to larger sizes particulate type pollutants. As the physical characteristics of particulate type pollutant become is getting more obvious, it is more effective for the air purifying components to separate them out.

Further, the ultrasonic atomizer in the water reservoir tank stores solutions of different hydrophilic characteristics or functions, (e.g., a solution containing a detergent, a solution containing bactericides, a solution containing enzymes with cleaning property., etc. ), The tiny mist or the atomized water vapor produced therefore having with different characteristics. It is even more compatible with gases type pollutants of the coking fume that present in the airflow,. The effect of pollutants removal in the air purifying device is enhanced.

An ultrasonic nebulizer employ the method of high-frequency electronic oscillation to convert that water in the water reservoir tank to tiny mist or water atomized vapor.

In some embodiments, an ultrasonic nebulizer having an oscillation frequency of 1.7MHz or 2.4MHz.

In some embodiments, the ultrasonic nebulizer vaporize the water to tiny mist or atomized water vapor, comprises the small mist size of $1\mu m$ to $5\mu m$ in dimension.

In some embodiments, on comparing the first airflow 111 and the second airflow 121, the first airflow 111 has a lower temperature. When combining the first airflow 111 and the second airflow 121, the thermal energy of the first airflow 111 and the second airflow 121 is transferring (Heat Transfer) to each other. Further, after the thermal energy transfer to each other by the first airflow 111 and the second airflow 121, the temperature level of the third airflow 131 is low enough that it is sufficient to let the gases phase pollutant within it be cooled down and condenses into a larger dimension of particulate type pollutant, which is more readily to be captured by the air purifying component 180.

In some of the embodiments, for the purpose to reduce the level of particulate contamination in the airflow, the air purifying component 180 is in used. The air purifying component 180 is any one or more of the following components: a high-voltage electrostatic precipitator, a filter, a filter components, centrifugal device and cyclone separators.

In one embodiment, the air purifying component 180 is multiple units of cyclone separators being connected together in a series manner, the connection method is that an air outlet of one cyclone separator is connected to an air inlet of another cyclone separator

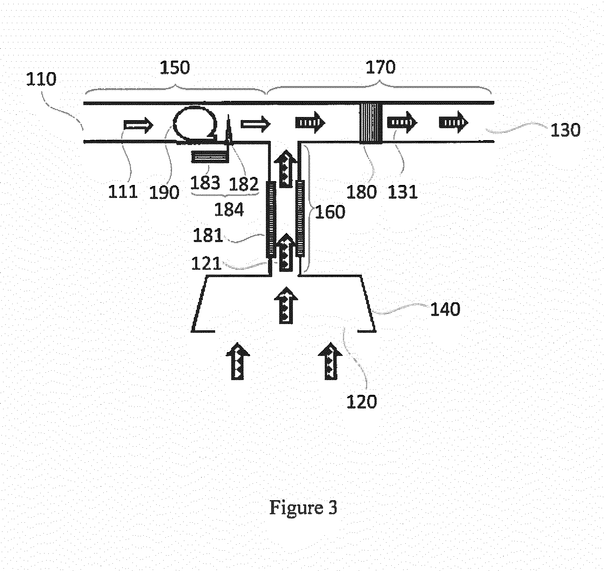

Figure 3 shows the third example of an embodiment of the present invention, its structure is similar to the one shown in the example 2, except that the air purifying device further comprises at least one pre-cooling device 181 and ion generator 184.

Pre-cooling device 181 is placed at an upstream position of the air purifying component 180. In the present embodiment, the pre-cooling device 181 placed in a position which is located in the second airflow duct 160, it will deliberately reduce the temperature of the second airflow 121 before the second airflow 121 entered into the air purifying component 180.

In one embodiment, the pre-cooling device 181 can also be placed in the first airflow duct 150, or at the merging point of where the first airflow duct 150 and the second airflow duct 160 are combined or connected.

When the air containing contaminants which is to be purified, as those in the second airflow 121 which is being drawn in as in the present invention, once the temperature of it is lowered, the air density of it would also be decreased, so as the kinetic energy of the particulate pollutants within the airflow. The distances between the particulates in the airflow is decreased and become closer as well, due to the decreased and weaken of the kinetic energy of the particulate pollutants in the airflow. As when the particulate pollutants within the airflow are getting closer to each other, the collisions would be occurred in between them. As within the third airflow 131 of the present invention, nucleation effect will then be induced by the collisions of the particulates, larger dimension particulates pollutants would then be formed, it will be easier for the air purifying component 180 to capture them at the downstream position.

In addition, the ion generator 184 comprises an electronic means 183 and an ion releasing tip, 182; the ion release tip 182 is disposed at the upstream position of the air purifying device 180. Any airflow which flow through the ion-release tip 182 will became an airflow containing ions, or an airflow carrying charged particulates. In the present embodiment, the ion releasing tip 182 is disposed on the airflow path of the first airflow 111, so that the first airflow 111 which pass through the ion releasing tip 182 becomes an airflow containing ions or an airflow carrying charged particulates.

When the first airflow 111 containing ions, or carrying charged particulates is flowing through the first airflow duct 150, it will eventually flowing across the merging point at where the first airflow duct 150 and the second airflow duct 160 are combined or connected. Then the airflow enters the common airflow duct 170. When the first airflow 111 is flowing through the merging point, it creates a negative air pressure region within the second airflow duct 160, and resulting that the second airflow 121 to be drawn into the second airflow duct 160 through the second air inlet 120. As the first airflow 111 containing ion or carrying charged particulates, on combining with the second airflow 121 within the common airflow duct 170, collision is occurred. The airflow containing ions or carrying charged particulates then become nuclei. In the third airflow 131 as described in the present invention, nucleation effect will be induced. The larger dimension particulates will therefore be coagulated and formed. The larger size particulates are easier to be capture by the air purifying component 180 at the downstream position.

In addition to the pre-cooling device 181 which is placed in the second airflow duct 160 as shown in the third example, the pre-cooling device 181 can also be placed in a common airflow duct 170 (as long as the pre-cooling device 181 is placed at the upstream position of the air purifying component 180). When the temperature of the common airflow duct 170 is lowered, so as the kinetic energy of the particulate pollutants within the airflow. The distances between the particulates in the airflow is decreased and become closer, due to the weakened of the kinetic energy of the particulates, and the lowered density of the air. As when the particulates within the airflow is closer to each other, with the further collision in the combined airflow with the that ions or charged particulates, the ion or charged particulates in the airflow will induce an nucleation effect, larger dimension particulates pollutants would then be formed, it will be easier for the air purifying component 180 to capture them at the downstream position.

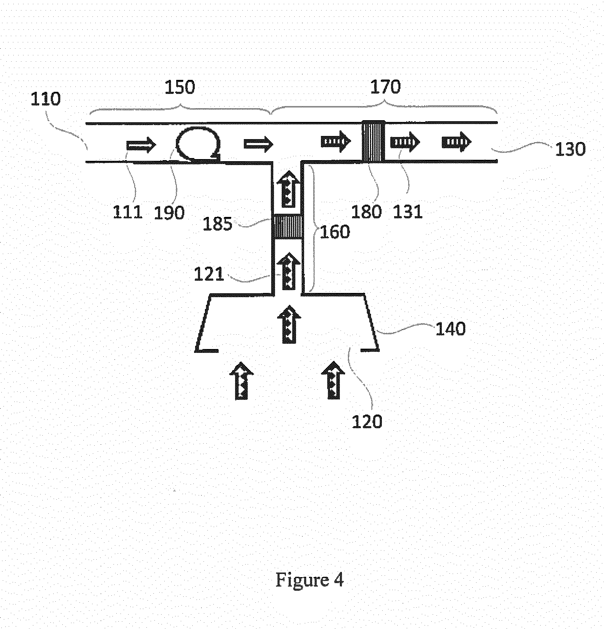

Figure 4 shows the forth example of an embodiment of the present invention, with the structure similar to Example 1 except it comprise two air cleaning components 180, 185. The two air purifying components 180, 185 are disposed in the second airflow duct 160 and common airflow duct 170 respectively, purifying the second airflow 121 and the third airflow 131.

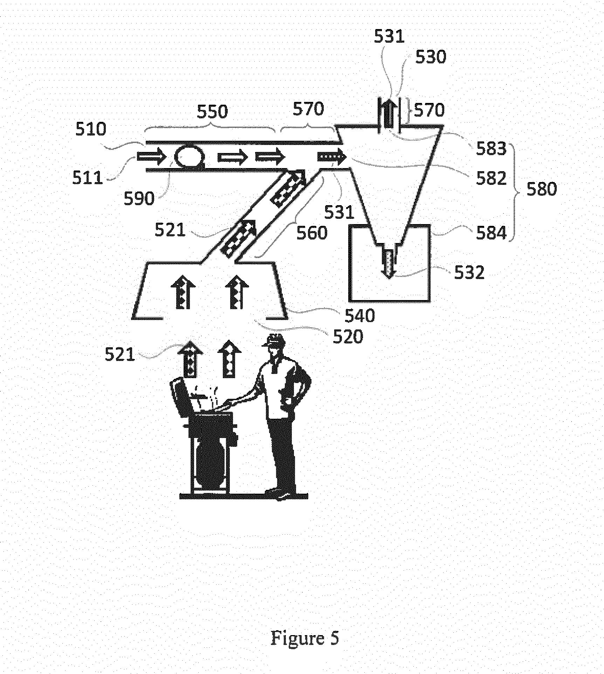

Figure 5 shows the fifth example of an embodiment of the present invention of an air purifying device, it comprises a first air inlet 510, a second air inlet 520, a fan blower 590, an air purifying component 580, a first airflow duct 550, a second airflow duct 560, a common airflow duct 570 and a common outlet 530. Wherein the air purifying component 580 further includes an air purifying component air inlet 582 and an air purifying component air outlet 583. The air purifying component 580 of the present embodiment is a cyclone separator. The cyclone separator 584 comprises a contaminant collection tank, a cyclone separators air inlet and a cyclone separator air outlet, the cyclone separator air inlet is equivalent to the air purifying component air inlet 582 as mentioned above, the cyclone separator air outlet is equivalent to the air purifying component air outlet 583 as mentioned above. In the present embodiment, the second air inlet 520 is also connected to a suction hood 540. The air inlet of the fan blower 590, through the first airflow duct 550, is connected to the first air inlet 510. At the other end where the first airflow 511 is output through the air outlet of the fan blower 590, through the common airflow duct 570, it is connected to the air purifying component air inlet 582, i.e., the cyclone separator air inlet. The entire cyclone separator is placed at a position on the common duct 570 (i.e. air purifying component air inlet 582 and air purifying air outlet 583 are connected to a common airflow 570), for purify the third airflow 531.

The fan blower 590 delivers the first airflow 511 through the first airflow duct 550 to the common airflow duct 570, and then further into the cyclone separator air inlet; wherein, at the upstream position of the cyclone separator, the first airflow duct 550 is connected to the second airflow duct 560, after the merging point, the common airflow duct 570, transport mixed air, which are from the first airflow 511 that drawn in from the first air inlet 510 and the second airflow 521 that drawn in from the second air inlet 520. In this embodiment, the common airflow duct 570 which is after the merging point that connecting the first airflow duct 550 and the second airflow duct 560, is very close to the cyclone separator air inlet. When the fan 590 outputs a first airflow 511 through the first airflow duct 550, the first airflow further flows to the merging point that connecting the first airflow duct 550 and the second airflow duct 560. A negative air pressure is formed within the inner space of the second airflow duct 560. The air that containing particulates pollutant, i.e., the second airflow 521, is being drawn into the second airflow duct 560 through the second air inlet 520. It is further be drawn into the cyclone separator 581. The particulates pollutant 532 is then collected at the contaminant collection tank 584. The cyclone separator outputs the purified air, i.e., the already purified third airflow 531, and let it be exhausted at the common air outlet 530 which is located at the end of the common airflow duct 570.

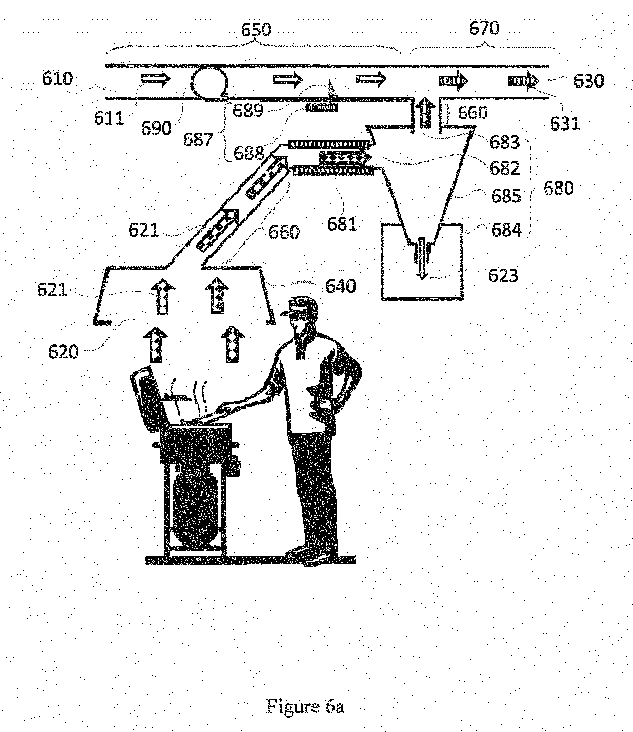

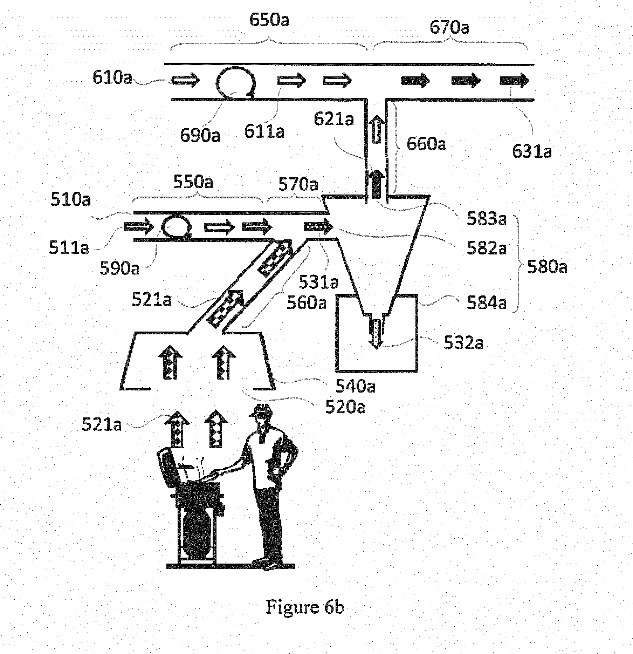

Figure 6 shows the sixth-a example of an embodiment of the present invention of an air purifying device, comprises a first air inlet 610, a second air inlet 620, the fan blower 690, air purifying component 680, a first airflow duct 650, a second airflow duct 660, a common airflow duct 670 and a common air outlet 630. The air purifying component further comprises an ion generator 687, the ion generator 687 comprises an electronic means 688 and an ion releasing tip 689. The air purifying component 680 further comprises an air purifying component air inlet 682 and an air purifying component air outlet 683. The air purifying component 680 of the present embodiment is a cyclone separator, the cyclone separator 681 comprises contaminant collection tank 684, cyclone separator air inlet and cyclone separator outlet, cyclone separator air inlet is above mentioned the air purifying component air inlet 682, cyclone separator air outlet is above mentioned the air purifying component air outlet 683. In the present embodiment, the second air inlet 620 is also connected to a suction hood 640. One air of the fan blower 690 which is for air intake, through the first airflow duct 650, is connected to the first air inlet 610. Another end of the fan blower 690 which is for output of the first airflow 611 through the first airflow duct 650, connects the second airflow duct 660m, forming a common airflow duct 670 after the connection. An air purifying component 680 is placed in a location at the second airflow duct 660.(i.e., the air purifying component air inlet 682 and air purifying component air outlet 683 are connecting with the second airflow duct 660) to purifying the second airflow 621.

In this embodiment, the first airflow 611 being drawn in to the air purifying device through the first air inlet 610 by the fan blower 690. The first airflow 611 to flow within the first airflow duct 650, and pass through the ion releasing tip 689. Partial of the first airflow 611 become an airflow containing ions or an airflow containing charged particulates, and then flows through the merging point which connect or combine the first airflow duct 650 and second duct 660, and further enter into the common airflow duct 670. When the first airflow 611 pass through the merging point, it results a negative air pressure region to be formed within the second airflow duct 660, which further results the second airflow 621 to be drawn into the second airflow duct 660 from the second air inlet 620. The second air inlet 620 is connected to a suction hood 640. When the second airflow 621 is drawn into the second airflow duct 660, it will also pass through the air purifying component 680, that is, it will enter into the cyclone separator air inlet, the particulate pollutants 623 is collected by the contaminants collection tank 684, the cyclone separator air outlet outputs the purified air, i.e. the purified second airflow 622. Together with the purified first airflow 611, merges into a third airflow 631 at the more downstream position of the common airflow duct 670. It is then flow within the common airflow duct 670. The third airflow 631 flow to the common air outlet 630 at the end of the common airflow duct 670 and be exhausted.

In some embodiments, the air purifying device may further comprises more than one first airflow duct, more than one second airflow duct, and more than one common flow duct. As indicated in the figure 6b, wherein showing the sixth-b example of an embodiment of the present invention of an air purifying device, the air purifying component air inlet 582a is connected to the air inlet of a common airflow duct 570a (The connection method is similar to the embodiment as shown in the Example 5);

In this embodiment, the fan blower 590a output the first airflow 511a through the first airflow duct 550a, and directly blow it to the common air flow duct 570a, and it further enters into air inlet 582a of the cyclone separator (air purifying component). Wherein, at the upstream position of the cyclone separator (air purifying component 580a), the first airflow duct 550a is connected to the second airflow duct 560b, after the merging point, the common airflow duct 570a, transport mixed air, which are from the first airflow 511a that drawn in from the first air inlet 510 a and the second airflow 521a that drawn in from the second air inlet 520a. In this embodiment, the common airflow duct 570a which is after the merging point that connecting the first airflow duct 550 and the second airflow duct 560a, is very close to the cyclone separator air inlet. When the fan 590a outputs a first airflow 511a through the first airflow duct 550a, the first airflow further flows to the merging point that connecting the first airflow duct 550a and the second airflow duct 560a. A negative air pressure is formed within the inner space of the second airflow duct 560a. The air that containing particulates pollutant, i.e., the second airflow 521a, is being drawn into the second airflow duct 560a through the second air inlet 520a, through the suction hood 540a of the second air inlet 520a. It is further be drawn into the cyclone separator (air purifying component 580a). The particulates pollutant 532a is then collected at the contaminant collection tank 584a.

The cyclone separator (air purifying component) air outlet 583a connect to another second airflow duct 660a, the other second airflow duct 660a and another first airflow duct 650a and another common airflow duct 670a are connected.

The first airflow 611a is being drawn into the air purifying device through the first air inlet 610a by the fan blower 690a. The first airflow 611a flowing within the first airflow duct, and passing through the merging point where connecting and combining the first airflow duct 650a and second airflow duct 660a, and flow into the common airflow duct 670a. When the first airflow 611a flow to the merging position, it creates a negative air pressure region within the second airflow duct 660a, which further draws the second airflow 621a (i.e., the airflow effluence from the air purifying component air outlet 583a) from the cyclone separator (air purifying component) outlet 583a to the second airflow duct 660a.

In some embodiments, the fan blowers 590a and 690a can also be derived from the same fans (that is, only one fan blowing a first airflow 511a and another first airflow 611a, both through the first air inlet 510a and 610a, flow into the first airflow duct 550a and 650a respectively.

Due to the reason that: (a) the air purifying component air inlet 582a is connected to the common airflow duct, the common airflow duct is equipped with a fan blower 590a to blow out the first airflow 510a directly, and (b) the air purifying component air outlet 583a is connected to the second airflow duct 660a, which within the second airflow duct 660a, it will become negative pressure region, when the first airflow 611a is flowing through the merging point, at where the first airflow duct 650a and the second airflow duct 660ais combined or connected. This direct method of inputting and outputting the air by the air purifying component 580a resulting a strong input and output airflow, which can resist the pressure drop and head loss by the air purifying component 580a.

In some embodiments, the air purification component 580a is multiple units of cyclone separators connecting in series, the connection method is that an air outlet of one cyclone separator is connected to an air inlet of another cyclone separator

In some embodiments described above, the air purifying device may further comprises at least one ion generator. For example, as shown in Figure 6a, the ion generator 684 comprises a electronic means 683 and an ion releasing tip 682. The ion releasing tip 682 is placed at the outlet of the fan blower 690. Further, the ion releasing tip 682 is placed at the upstream position of the air purifying component 680 (i.e., the cyclone separator). In the present embodiment, the ion releasing tip 682 disposed in the first airflow duct 650.

In the present embodiment of 5 and 6a, the outer housing of the cyclone separator is connected to a pre-cooling device 681 (as shown in the figure 6a), the pre-cooling device 681 cool down the air which pass through the cyclone separator.

Further, the outer housing portion of the cyclone separator also equipped with an air purifying component cooling device, air purifying element cooling device is placed at the external position of air purifying component and surrounds the air purifying component. This will lower the temperature of the airflow when it is flowing into the air purifying component.

In one of the embodiments, the air purification component is multiple units of cyclone separators connecting in series, the air purifying component cooling device is placed within the contaminant collection tank of the cyclone separator. This will lower the temperature of the pollutants when it is entering into the contaminant collection tank of the cyclone separator. Condensation or coagulation will happen for the fine particulates in the airflow when the temperature of them lowered. They will then be collected by the contaminant collection tank of the cyclone separator.

The air purifying component cooling device is a thermoelectric cooler module, a semiconductor type cooling chip, or a water condensing cooling unit, or a device similar functions.

When the air purifying device is applied to a kitchen range hood, the air which flow into the air purifying component will have higher temperature. The air pollutants in the airflow comprises mostly in gases phase, when they enter into the pre-cooling device, and / or air purifying component cooling device, the temperature of the airflow will decreased. The oil mist that present as gases phase in the cooking fume, will be cooled and further condensed into the larger dimension particulate type pollutants. As the physical characteristics of larger dimension particulate is obvious, they can be effectively be separated by the air purifying component.

Further, the outer housing of the cyclone separator part, connected to the heating device 685. After a period of operation, some particulate contaminants become thickened and stick to the inner surface of the housing of the cyclone separator. On shutting down the operation of the air purifying component, the user can turn on the heating device 685, this will lowers the viscosity thickened oil that stuck on the cyclone separator casing, and allow them to flow to the contaminant collection tank 684.

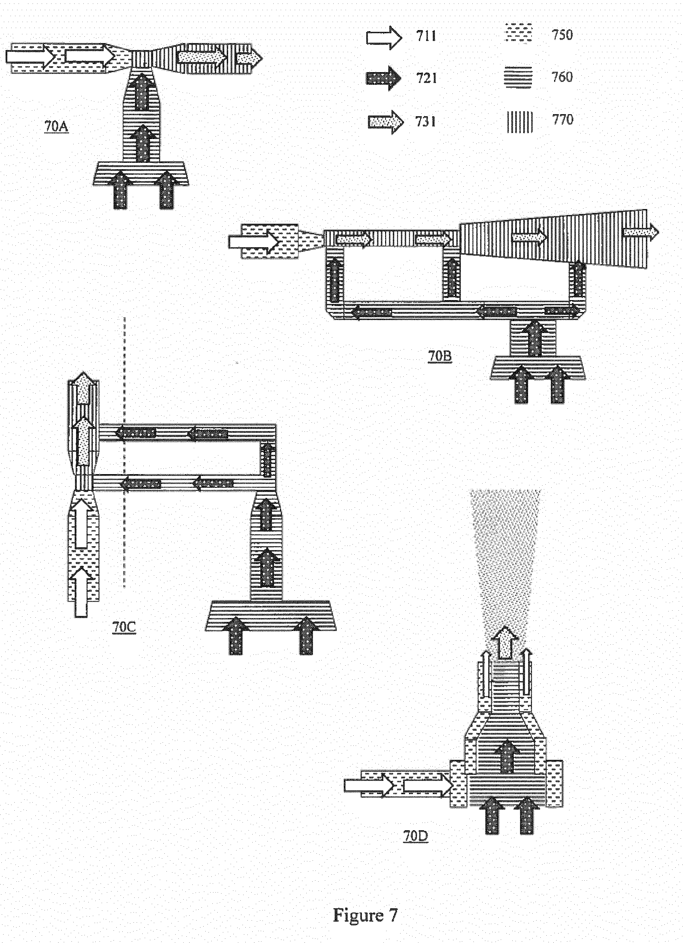

Figure 7 illustrates the seventh example of an embodiment of the present invention, different way of merging the first airflow duct and the second airflow duct is described. The specific meaning as indicated in the label of figure 7 are: the first airflow 711; the second airflow 721; the third airflow 731; the first airflow duct 750; the second airflow duct 760; the common airflow duct 770. When the first airflow 711 is being drawn into the air purifying device through the first air inlet by the fan blower, it is flow within the first airflow duct 750, and pass through a merging point where the first airflow duct 750 and the second airflow duct 760 being combined or connected. The airflow further enter to a common airflow duct 770. Wherein, at the position where the first airflow duct 750 and second airflow duct 760 merge or connect, the cross section area of it is smaller than the cross section area of the first airflow duct 750. The first airflow duct 750 is gradually narrowed, having the minimal pressure at the merging point, when the first airflow 711 is passing through merging point, it will form a negative pressure within the second airflow duct 760, and this will then enable the second airflow 721 to be drawn into the second airflow duct 760 through the second air inlet. The merging point or connected position, further comprises the following characteristics:

(a) the first airflow duct 750 and the common airflow duct 770 are aligned linearly, such as that shown by the devices 70A, 70B, 70C and 70D;

(b) a second airflow 721 is branched to flow within different second airflow ducts 760, they are connected to the first airflow duct 750 which the cross-sectional area being gradually narrowing, and/or the common air flow duct 770, there are the best, the biggest attraction force for the second airflow 760 duct from the hood, such as that shown by the devices 70A, 70B, 70C below;

(c) the first airflow duct 750 is a duct having the cross-sectional area being gradually narrowing. At the where it is the narrowest, the first airflow 711 tow the second airflow 721 and combined to form a third airflow 731.

(d) There is no restriction on the direction on the third airflow by the combined airflow, such as that shown by the devices 70D.

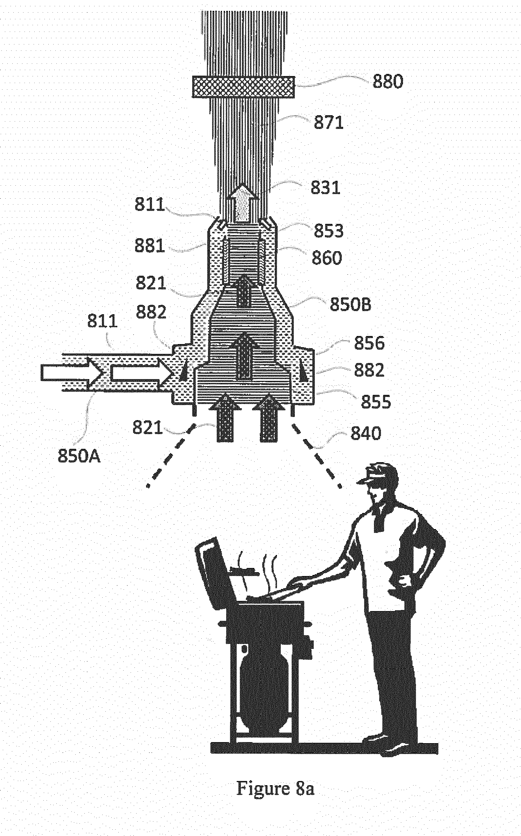

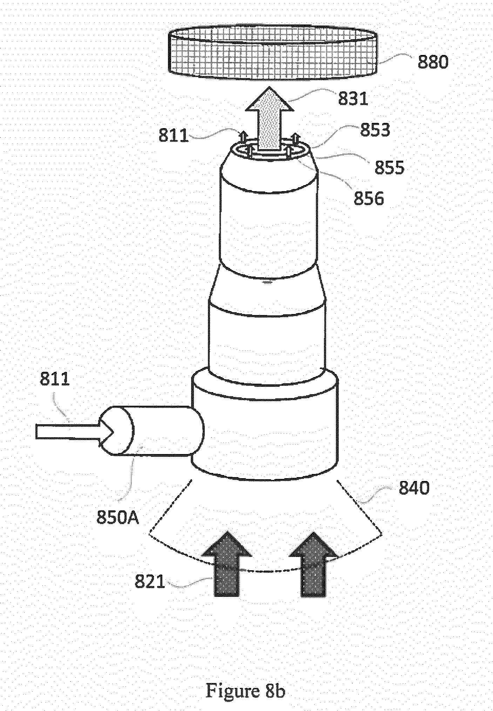

Figure 8a and 8b further illustrates the eighth example of an embodiment of the present invention which a cross section diagram (Figure 8a) and a perspective view (Fig. 8b) are shown. The 8 embodiment explain in details when the device 70D is being put in the Figure 7. The 8th embodiment illustrates an example of the air purifying device in the present invention.

Figure 8a showing a cross section view of an air purifying device, a first airflow duct 856 is composed by an inner sidewall 855 and outer sidewall 856, which are in opposed to each other. The inner sidewall 855 and outer side wall 856 as shown in the cross section view is in a cyclic structure, for example, as a "o" shaped cyclic structure. The space between the inner sidewall 855 and outer sidewall 856 form an annular conduit lumen 850B. The inner sidewall 855 surrounded a hollow channel 860. Wherein at one end, the inner sidewall 855 and the outer sidewall 856 are connected. At the other end, to the inner sidewall 855 and the outer sidewall 856 forms a slit 853; at least one extending channel is 850A is connected to the annular conduit lumen 850B, it delivery a first airflow 811 to the conduit annular lumen 850B, the first airflow 811 is then being discharged through the slit 853. It is therefore, in the present embodiment, the annular conduit lumen 850B and extending channel 850A is being understood as a first airflow duct. The hollow channel 860 in this embodiment is being understood as the second airflow duct. The first airflow 811 is being input into the extending channel 850A to the annular conduit lumen 850B, it is then being expelled from the slit 853. This process will create a negative air pressure region with the hollow channel 860, the second airflow 821 then being flown in, from one end of the hollow channel 860 to another end of the hollow channel 860. At a point near to the slit 853 where the first airflow exhausts, the second airflow 821 merges with the first airflow 811, and form a third airflow 831, which is then be discharged.

In the present embodiment, the first airflow duct 850A, 850B and second airflow duct 860 are placed at the upstream positions of the air purifying component 880, which respectively independently drawn in air from different sources, being regarded as the first airflow 811 and the second airflow 821. The first airflow 811 and the second airflow 821 flow within the first airflow duct 850A, 850B (i.e. the annular conduit lumen 850B and the extending channel 850A) and the second airflow duct 860 (i.e. hollow channel 860). The first airflow 811 and the second airflow 821 merge at the upstream location (i.e., at the slit 853 where the first airflow 811 being exhausted) of the air purifying component, forming a third airflow 831, the combined airflow will then be discharged. Wherein, the first airflow 811 containing clean air, at least, compared to the second airflow 821, which has not yet be purified by the air purifying component 880, the first airflow 811 comprises a less air pollutants. The second airflow 821 contains the air pollutants which are to be purified.

Wherein, an air purifying component 880 is placed within the second airflow duct 860 and/or the path 871 of the third airflow 831 of the 860, for purifying the second airflow 821 or/and the third airflow 831. The air purifying component 880 is any component that function to reduce the levels of air contaminants.

Further, the air purifying device comprises an ion generator, the ion releasing tip 882 of the ion generator is disposed on the path of the first airflow 811, so that all the first airflow 811 which did passing through the ion releasing tip 882 will become an airflow contains ions or an airflow contains charged particulates. Further, the air purifying device in the present embodiment further comprises at least one pre-cooling device 881, the pre-cooling device 881 is disposed at an upstream position of the air purifying component 880, the pre-cooling device 881 lowers the temperature of the second airflow 821. Further, in this embodiment, the pre-cooling device 881 is placed at one position of the sidewall 855, or within the hollow channel 860, to deliberately reduce the temperature the second airflow 821 quickly.

The Ion-containing airflow, or the first airflow 811 containing charged particulates flow within the first airflow duct (i.e. the annular conduit lumen 850B and extending channel 850A), and be discharged from the slit 853 of the first airflow duct.

The air containing contaminants which are be purified, as the second airflow 821 which is being in taken as described in the present invention, having it temperature being lowered by the pre-cooling device 881, will have the air density be decreased, and so as the kinetic energy of the particulate pollutant within the airflow. The distance between the particulate pollutants is decreased and they get closer to each other, which caused by decreased of the air density and the weakened of the kinetic energy of a particulate pollutants. When the distance of the particulate pollutants becomes closer, further merging or collide with the airflow that contains ion or containing the charged particulates, such as the first airflow 811 which is being described in the present invention, the ion or the charged particulates in the airflow will become the nuclei for nucleation effect to happen, similar to that happened in the third airflow 831 as describe in the present invention. The particulates will then be integrated and knot to form larger dimension particulate pollutants. The larger particulate pollutants will be more easily to be capture by the air purifying component 880.

In this embodiment, the air inlet of the second airflow 821 is further connected to a suction hood 840. Further, the air purifying component 880 is a high-voltage electrostatic precipitator which have low airflow resistance. It does not affect the flowing path of the third airflow 831. It has certain distance with the first airflow duct. The distance is far enough in such a way that the second airflow 821 which being towed by the first airflow 811 will not be obstructed by the air purifying component.

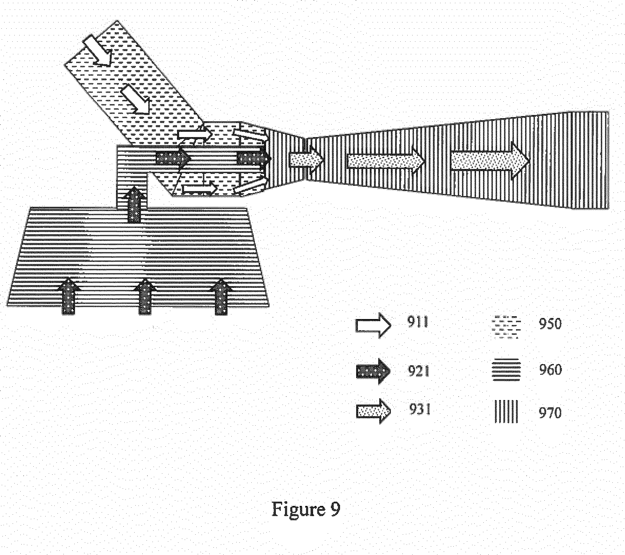

Figure 9 illustrates another way of merging the first airflow duct and the second airflow duct in the present invention. The meaning of the labels as specified in the Figure 9 are: the first airflow 911; the second airflow 921; the third stream 931; the first airflow duct 950; the second airflow duct 960; the common airflow duct 970. Wherein, the second airflow duct 960 is being inserted within the first airflow duct 950. The final direction of airflow path of the second airflow 921 (i.e., where it is discharged from the second airflow duct), is the same direction as the airflow path of the first airflow and the airflow path of the subsequently third airflow 931. Further, the outlet of the second airflow duct 960 in located at the narrowest position within the first airflow duct 950; further, the outlet of the second airflow duct 960 in located at the minimum cross-sectional position within the first airflow duct 950; the common airflow duct 970 is a gradually enlarging duct, which enlarges from the location of the narrowest cross-sectional area.

The present invention is illustrated with a several specific embodiments as described above. Without departing from the scope of the invention, the present invention can also be changed, be varied and be substituted equivalently. As long as a first airflow which generated by the fan blower creates a negative pressure region, which lead to the drawn in of the second airflow which contains the pollutants and yet to be purified, into the air purifying component from the second air inlet; or by employing a cooling device to lower the temperature of the air that contains the particulate pollutants; or with further combination of one airflow to another airflow that contains ion, or another airflow that contains the charged particulates for acting as nuclei in a nucleation effect within the cooled air, so that some larger dimension particulates pollutants are formed from some finer particulate pollutants, after integrating them together; the larger dimension particulate pollutants are then captured by the air purifying component; or with the combination of any of the above methods to a cyclone separator and by sudden changing the temperature, converting the gases phase pollutants to particulates phase pollutants, or changing the respective concentrations of the gases phase pollutants and the particulates phase pollutants, all fall into the spirit of the present invention. In addition, for specific situations, various modifications without departing from the scopes of the invention can be performed. Accordingly, the present invention is not limited to the particular embodiment as disclosed herein, but all embodiments that will fall within the scope of the claims of the invention.

The present invention of air purifying device employing a fan blower to generate a first airflow which then consequently creates a negative pressure region, the air containing pollutants which is to be purified, is drawn into the air purifying component from a second air inlet. When the air purifying device is applied to cooker hood, the cooking fume to be cleaned is drawn to the air purifying device from the second air inlet. Since the contaminants is avoided from being adsorbed onto the fan blower, the risk of catching fire by the fan blower is reduced. The life of the fan blower is also extended. Further, by avoiding the design of "filter and fan are arranged in series as layer by layer manner", even if filter with a higher airflow resistant is in used within the air purifying component, a higher torque motor or fan blower with backward blade fan may not be necessary to be used. It is well known that though higher torque motor or the fan blower with backward blade can overcome the system with high airflow resistance, they are of high energy consumption and generate high noise level. The above-described embodiments of air purifying devices provided the advantages of energy saving and noise reduction. Apart from being applied as cooking fume purification device, the air purifying device can be used equipped with various types of air purifying component for different types of pollutants purification. The following provides the further description on the modification on application of air purifying device.

In some embodiments, the air purifying device comprises at least a first chamber, the first chamber includes at least one air inlet (hereinafter referred to as the "first air inlet") and at least one air outlet (hereinafter referred to as the "first air outlet"), said first outlet located at any position downstream of the first chamber; and at least one second chamber, the second chamber comprises at least one air inlet (hereinafter as "second air inlet") and at least one air outlet (hereinafter as "secondi air outlet") is the second air inlet is disposed within the first chamber, and it is located between the first air inlet and the first air outlet, the second air inlet draw in air directly from the first chamber; the second air outlet is located adjacent to the first air outlet adjacent, or at a position slightly upfront (slightly upstream) abutting to the first air outlet; and

at least one filter (hereinafter referred to as "the primary filter)"; the primary filter is disposed within the second chamber, and purify all air that enter into the second chamber.

Alternatively, the air purifying device comprises at least one main airflow system and at least one side airflow system;

The main airflow system includes at least one air inlet (hereinafter as "first air inlet ") and at least one air outlet (hereinafter as "first air outlet), the main airflow system comprise a space which is located between the first air inlet and the first air outlet (hereinafter referred to as the "first chamber,"), the first outlet located anywhere downstream of the first chamber, at least one fan blower to drive a first airflow, to flow within the first chamber from the upstream to the downstream, from the first air inlet to the fist air outlet, and be discharged from the first air outlet;

The side airflow system includes at least one housing and at least one filter (hereinafter as "the primary filter), at least one air inlet (hereinafter referred to as the" second air inlet") and at least one air outlet (hereinafter as" second air outle "), at least one space (hereinafter referred to as" second chamber "); the primary filter is located within the housing of the side airflow system, to purify all air flow into the second chamber through the second air inlet. The second air inlet is located at the most upstream position of the housing, the second air outlet is located at the most downstream position of the housing, the primary filter is located downstream of the second air inlet, the second chamber is located in a position which is between the primary filter and the second air outlet;

The second air outlet is located adjacent to the first air outlet adjacent, or at a position slightly upfront (slightly upstream) abutting to the first air outlet.

When the air within the air purifying device is driven to flow from the upstream to the downstream (hereinafter as "the first airflow "), it flow from the first air inlet to the first chamber, and then be discharged from the first air outlet directly. When the first airflow is exhausted from the first air outlet, the air at the position which is adjacent to, or the air at the position which is slightly upfront (slightly upstream) abutting to the first air outlet, i.e., the air around the second air outlet, is in traction by and be discharged with the first airflow, a negative air pressure region (hereinafter called "negative pressure area") is produced within the second chamber, the second airflow enters to the second chamber through the second air inlet, and this airflow is being purified by the primary filter.

Further, the second airflow which being in traction by the first airflow and exhausted from second air outlet combined with the first airflow and be exhausted from the first air outlet.

Further, an electrical device (such as electric fans, dehumidifiers, humidifier, cooling unit, air conditioners, heater etc.) containing another fan make the main airflow system. The air inlet of the electrical device is defined as the first air inlet; the air outlet of the electrical device is defined as the first air outlet; the air exhausted from the first air outlet is defined as the "main airflow" (i.e, the first airflow). The main airflow system is the electrical device, the location of its first air outlet is located at a position which is adjacent to the second air outlet of the side airflow system. Further, the first air outlet in a position slightly upfront of the second outlet.

When the first airflow is discharged from the first air outlet of the electrical device, the air at the second air outlet also be in traction by the exhausting airflow, from the second air chamber, it will be exhausted out through the second air outlet. The second chamber (i.e., the space within the second airflow system) becomes a negative air pressure region (hereinafter "negative pressure region), the air with pollutant enter into the second chamber through the second air inlet, on passing through the primary filter, the second airflow is purified by the primary filter.

Further, the first outlet is in a shape which is as a gradually narrowing outlet, this increase the speed of the first airflow, to enhance the negative air pressure effect within the second chamber. This is because, at the narrowest point, the dynamic pressure of the first airflow (velocity head) reaches to a maximum value, and the static pressure (static pressure) reach to a minimum value. Due to the change on the cross-section of the first airflow, the speed of it is increase. As the entire airflow is experiencing a process of passing through a narrowed first air outlet, the static pressure is reduced at the same time. Thereby a pressure difference is generated, this pressure offers an external suction force for the side airflow, so the second chamber of negative air pressure is produced. Therefore, if the first air outlet is in a shape gradually narrowing first outlet, a better negative air pressure effect will be produced in the second chamber.

When the main airflow system is an electrical device (such as electric fans, dehumidifiers, humidifier, cooling unit, air conditioners, heater etc.) containing another fan make the main airflow system. Further, when the electrical device is engaged with the side airflow system, the main airflow system further comprises at least one main airflow concentrator, which is a main stream concentrator is a device to collect and focus the first airflow. When the first airflow is discharged from the electrical device, it will first enters to the main stream concentrator, the main airflow concentration then converts and reorganize of the first airflow to a high-speed first airflow. The main stream concentrator comprises an air outlet which is in a shape of gradually narrowing.

Further, the side airflow system further comprises a hollow annular housing portion and a primary filter carrying portion, said hollow annular housing portion in a shape as an alphabet letter "o"; the hollow annular housing portion comprises an air outlet (which is the second airflow outlet) in annular "o" shape and the second chamber of the side airflow system. The "0" shaped second air outlet is located the circular ring of the hollow annular housing portion, the second chamber is majorly located with the hollow annular housing portion (the second chamber also may be extended to the primary filter carrying portion). The air exhausted from the second airflow outlet, which is flowing out from the central the hollow annular housing portion.

Further, a hollow annular housing portion of the side airflow system has a shape looks like an alphabetic letter "o", just as one described in one of the embodiments; the hollow annular housing portion may also be in other hollow ring (such as oval, square, etc.) from, as long as the second air outlet which exhaust from the second airflow outlet, are from the hollow annular housing portion, it fall into the spirit of this patent.

Further, the second airflow outlet is an outlet having a shape which is gradually narrowing, or it is a nozzle type outlet. The hollow annular housing portion comprises a curved shape portion, having the curvature at the side facing to the hollow circular core. When the second airflow is exhausted from the second air outlet (i.e., the second airflow), it flows out from the void within hollow annular housing portion, a Coanda effect is created at the curved shape portion by exhausting second airflow, the air outside the air purifying device is in traction by those air nearby the hollow annular housing portion, to flows through a central hollow part of the hollow annular housing portion together with the second airflow.

The main airflow system comprises a hollow annular housing portion, it is operated in coordination with the hollow annular housing portion of the second air flow system. The second air outlet surrounds a whole or a partial part of the first air outlet; or the first air outlet surrounds the whole or a partial part of the second air outlet. When the first airflow is exhausted from the first air outlet, it will pass by the central hollow region of the hollow annular portion of the second airflow system.

When the hollow annular housing portion of the side airflow system is engaged to operate with the main airflow system, the hollow annular housing portion (the second air outlet) surrounds a whole or a partial part of the first air outlet. When the first airflow is flow out from the main airflow system, it will pass by the central hollow region of the side airflow system. When the first airflow is exhausted from the first air outlet of the main airflow system, the air located at the second airflow outlet, will be in traction and be exhausted by the first airflow. It will exhausted out from the second chamber through the second air outlet. A negative air pressure region (hereinafter called "negative pressure area") is produced within the second chamber, the second airflow enters to the second chamber through the second air inlet, and this airflow is being purified by the primary filter. With this design, the second air outlet (the "o" shape air outlet) is evenly located at the circumference of the hollow annular ring, so when the airflow is in traction and be discharged from the second air outlet of the side airflow system by the main airflow, a better and more evenly distributed negative air pressure effect is formed within the second chamber. This negative air pressure effect is extended to the primary filter carrying portion. To meet the need, the primary filter carrying portion is forms by a flexible duct tubing, the position of the second air inlet, can be extended to or shortened, or transferred for a different orientation, according to the air purification needs, or the changes in the concentration of pollutants or sources, reassignment to different orientations is allowable.

Further, a hollow annular housing portion extends to the primary filter carrying portion, where the primary filter is carried within it. The shape of the primary filter is not related to the shape of the annular hollow housing portion, the shape of the primary filter is belong to a standard shaped type filter.

Further, the second air inlet is located within the first chamber, it is further located between the first air inlet and the first air outlet. The second inlet draw in air directly from the first chamber, in this case, the air enters to the second chamber from the first chamber;

Further, the second chamber also comprises at least one air inlet, to draw in the air from the outside of the first chamber directly (hereinafter as "the third air inlet" or the external). In this case, the air enters the second chamber from the external.

If the air purifying device is provided with only the second air inlet, or all of the air entering into the second chamber are all from the first chamber, the primary filter will be located at the second air inlet, or located in between the second air inlet and the second air outlet; all the air flow into the second chamber through the second air inlet air must pass through the primary filter, and be discharged to the second air outlet.

If the air cleaning device is provided with the second air inlet and the third air inlet. Further, the air purifying device comprises a by-pass mechanism for selecting the airflow to be drawn into the second chamber, if it will be all from the second air inlet, or all from the third air inlet, or in partial from the second air inlet and partial from the third air inlet.

Under normal circumstances, if the air come into the first air inlet and the air come into the second chamber are from the same or similar circumstances, the same way as the air go into the second chamber is come from the third air inlet, which both having the similar concentrations or levels of pollutants. The purification effect will not be in big difference as when compared with those air that come from the first chamber. However, if it meet one of the following conditions, whether the air enter to the second chamber is from the first air inlet or it is from the third air inlet will bring distinct different on purification effect, due to the difference sources:

If the air come into the first air inlet and the air come into the second chamber are from different environments, the same way as the air drawn into the second chamber is coming from the third air inlet. For example, the air drawn into the first air inlet is cleaned or purified air, while the air being drawn into the second chamber contains higher concentrations of pollutant. The purification effect on the air which entering into the second chamber from the third air inlet, will be relatively more obvious in comparing to the purification effect on the air which entering into the second chamber from the first chamber. This is because if the air entering into the second chamber came from the third air inlet, which has higher concentrations of pollutants, the purification effect by the primary filter will be more significant.

When the air enters to the first air inlet and the air enters to the second chamber are from the same or similar circumstances, it gives similar purification effect on if the air is drawn from the first air chamber or the third air inlet. However, under some special circumstances of the application of" air enters into the second chamber from the first chamber", for example, when the fan blower of the main airflow system is placed upstream of the second air inlet, "air enters into the second chamber from the first chamber" will save more energy on motor power consumption than "air enters to the second chamber through the third air inlet". This is because, "the air enters into the second chamber from the first chamber" having a structure that the second air inlet is placed within the first chamber, thus the air is pumped into from first chamber directly, the mechanism of the action that "air is pumped into" helping the operation of the fan motor, and reduced the loading of the motor. In opposite, if the fan blower of the first airflow system is placed downstream of the second air inlet, "air enters into the second chamber from the first chamber" cannot help to save the power consumption by the fan motor, it will also possibly increase the power consumption of the motor.

Thus, if there is a by-pass mechanism in the side airflow system, for selecting the airflow to be drawn into the second chamber, if it will be all from the second air inlet, or all from the third air inlet, or in partial from the second air inlet and partial from the third air inlet. The structure of the entire air purifying device can be appropriately and flexibly adjusted, based on the concentration of the pollutants of the air which entering into the first air inlet and entering into the second chamber.

If the air to drawn into the second chamber must all from the second air inlet (i.e., all of the air into the second chamber are from the first chamber), then the air from the third air inlet will be stopped, the third air inlet is being blocked or covered. In reverse, if the air drawn into the second chamber must all from the third air inlet (i.e., all of the air into the second chamber are from the outside environment of the first chamber), then the air from the second air inlet will be stopped, the second air inlet is being blocked or covered.

If the air cleaning device is provided with a second air inlet and a third air inlet, the primary filter will be placed at on at least one of the following positions: (1) the primary filter is located in between the second air inlet, the third air inlet and the second air outlet;, or (2) of the air purifying device have at least two primary filter, the primary filters are located at the second air inlet and at the third air inlet, so that all incoming effluent (i.e., the airflow discharged from the second air outlet) must go through the primary filters.

Further, the primary filter is located at the second air inlet, and/or located at the third air inlet, a partial or the whole part of the primary filter form the second chamber, that is, the second chamber is composed by a partial of the whole part of the primary filter; the air inlet side of the primary filter will be according to where the airflow coming from, whether it is from the first chamber or from the outside of the first chamber, be defined as the second air inlet or third air inlet. The support of the primary filtering materials formed a shape as an air outlet, and that will be regarded as the second air outlet.

Further, the air purifying device comprises control device, the control device might be operated with a manual control, or by a central processor, to control the bypass mechanism, which to select whether the whole or partial of the second air inlet or third air inlet will be covered or block. If the second air inlet is completely covered, when the second chamber became a negative pressure region, the second airflow will be the air drawn from the outside of the first chamber, they are the air being drawn in from the third air inlet, and pass through the primary filter, it is then be towed and be discharged by the first airflow, exhaust from the second air outlet, and merged with the first airflow, and exhaust from the first air outlet. If the third air inlet is completely covered, when the second chamber became a negative pressure region, the second airflow will be the air drawn from the first chamber, they are the air being drawn in from the second air inlet, and pass through the primary filter, it is then be towed and be discharged by the first airflow, exhaust from the second air outlet, and merged with the first airflow, and exhaust from the first air outlet.

Further, the first outlet is a gradually narrowing shaped-type outlet, or a nozzle-type outlet Although the second outlet is not necessarily be a gradually narrowing shaped-type outlet, narrowing air outlet can increase the effect of the negative air pressure that happen in the second chamber.

In some embodiments, the first outlet and the second outlet are gradually narrowing shaped-type outlets respectively.

A whole or partial of the second chamber is placed within the first chamber.

Further, the first outlet is an outlet that gives a venturi effect. When the first airflow from the first outlet is flowing at high-speed, a low pressure region will be created nearby the first air outlet, an adsorption effect is create, the adsorption effect let second airflow be in traction to flow out from the second chamber. The second airflow is discharged together with the first airflow. The operation principle of the air purifying device is the same as the principle of the venturi effect: when the first airflow is exhausted out from the gradually narrowing first air outlet, at the narrowest point, the dynamic pressure (velocity head) reached to a maximum value and the static pressure (resting pressure) reached to minimum value. Due to the change on the cross-section of the first airflow, the speed of it is increase. As the entire airflow is experiencing a process of passing through a narrowed first air outlet, the static pressure is reduced at the same time. Thereby a pressure difference is generated, this pressure offers an external suction force for the side airflow, so the second chamber of negative air pressure is produced.

Further, the hollow annular housing portion of the main airflow system and the side airflow system comprise curved shape portions, having the curvature at the side facing to the hollow circular core. When the air is exhausted from the first air inlet and/or second air outlet, it flow on the surface of the curved shape portion. The exhausted air will be adhere to flow on the curved shape surface.

Further, some part of the housing of the side airflow system comprise a curved shape portion, this can lead to a result that when the air is exhausted from the first air inlet and/or second air outlet (includes the air being exhausted from the first air inlet and the cleaned air being exhausted from the second air outlet), a Coanda effect is created at the curved shape portion. That is, when the air is exhausted from the first air outlet and/or the second air outlet, it will also pass by the curved shape surface. As the exhaust air comprises the curved flow line, the external air pressure is therefore higher than that of the exhausted airflow, at the interface where between the inner part and curved surface of the exhausted airflow. The exhausted air is adhered on the curved surface to flow on. Having flown out from the first air outlet and/or the second air outlet with a Coanda effect being created, it brings certain advantages to the entire air purifying device. The Coanda effect let the surrounding air, which are the air around the first air outlet and/or the air around the second air outlet (this is the air nearby the first air outlet and/or the second air outlet, hereinafter "the surrounding air", but not those air which is exhausted from the first air outlet and the second air outlet) be in traction and flow together the exhausting air (the air being exhausted from the first air outlet and the second air outlet) of the purifying device. Compare with the air purifying device without the Coanda effect, the one with Coanda effect will have better air ventilation. Better air ventilation greatly enhance the bi-directional and multi-directional on air convection in the environment during the air purification process. The bi-direction and multi-directional air convection enhancement is a three-dimensional air movement which cannot be achieved by just a fan, as it assist to well mix the non-evenly distributed levels of pollutants in the environment. The cleaned air will not be just stayed or accumulated in around the air purifying device, but by the bi-directional and multi-directional air convection, being transferred to more distance location from the air purifying device. The higher level pollutants, which are located rather apart from air purifying device, will not be passively and slowly, by gradual diffusion, being brought to the air purifying device, it is actively being brought to the air purifying device nearby by the bi-directional and multi-directional, and then be purified.

Further, the housing of the first air outlet comprises a curved shape portion at it housing, when the cleaned air is exhausted from the first air outlet, a Coanda effect will be generated. That mean when the purified air is discharged from the first air inlet, it flow on the surface of the curved shape portion, as the exhausted air will be adhere to flow on the curved shape surface. As the exhaust air comprises the curved flow line, the external air pressure (i.e., the atmospheric pressure) is therefore higher than that of the exhausted airflow, at the interface where between the inner part and curved surface of the exhausted airflow. The exhausted air is adhered on the curved surface to flow on.

Further, the air purifying device employs some controlling device (example: a hinge, motor or the shutter switch), to control the amount, velocity, and sources of the first air flow to pass through the primary filter, i.e., whether the air entering into the second chamber shall came from the outside or inside of the first chamber, whether the second air flow is drawn in from the second air inlet or the third air inlet.

Further, the orientation of the air inlet side of the primary filter is preferably deviated away from the flow direction of the first air flow, so that to avoid the direct blowing or hitting the air of the first airflow on the air inlet side of the primary filter, to avoid the airflow be affected by the static pressure of the primary filter, which will increase the loading of the fan blower. When the negative air pressure region is created within the second chamber, the second airflow will be draw to enter the air inlet side of the primary filter, the second airflow will enter to the second chamber through the primary filter.

Further, the air inlet side of the primary filter, forming an acute angle (i.e., less than 90 degrees) relationship relative to the direction of the first airflow. Further, the orientation of the air inlet side of the primary filter is arranged in parallel with the direction of flow of the first airflow.

Furthermore, the air purifying device further comprises a divider, the divider is placed within the first chamber, and it is placed at the downstream position of the first air inlet and at the upstream position of the second air inlet, the divider substantially separating the first airflow outlet and the second air inlet. The divider split the air into at least two portions, wherein at least one portion of the air (i.e. the first airflow), without passing through the second air inlet, and access to the first air outlet. This can prevent the first airflow, when flow to the second air inlet would be drawn into the second chamber by the reason of the negative air pressure region is being created in the second chamber, which would other reduce the first airflow amount and velocity.

Further, the housing part of the second chamber form the divider; the second chamber shapes and orientations housing having the function as the divider, which substantially separates the first air outlet and the second air inlet.

The air purifying device further comprises a flow deflector, the flow deflector is placed in the first chamber, when airflow is drawn to flow from the upstream to downstream, and the flow deflector guides the airflow to the direction of the first air outlet. The flow deflector make the airflow to become laminar flow, the direction of the flow is focus to the first air outlet.

If the first air outlet is located at one side of the first chamber, the flow deflector may be a planar baffle, or a group of the baffle planes, or a honeycomb shaped deflector. It is tilted within to the first chamber, and guides the airflow to the direction of the first air outlet, which is located at one side of the first chamber.

Further, the guide is a set of planer baffle, or a honeycomb shaped deflector, the channels for the air to flow through is the channels in gradually narrowing shaped channel.

Further, the dust collector of the high-voltage electrostatic precipitator is being employed as the flow deflector, when the flow deflector for guiding the air at the same time, the flow deflector will play the role of air purification. The particulates pollutants in air will be separated and be adsorbed.

At a position which is downstream of the first air outlet, and upstream of the second air outlet, further comprises a pre-filter.

Further, the pre-filter is preferably to be a filter of lower static pressure, such as high-voltage electrostatic precipitator, a preliminary dust filtration filter. At a face velocity of the airflow is 5.33 cm/s, it is an airflow resistance of the filter is 120Pa or less; or at a face velocity of the airflow is 5.33 cm/s, it is an airflow resistance of the filter is 40Pa or less; At a face velocity of the airflow is 5.33 cm/s, it is an airflow resistance of the filter is 25Pa or less; At a face velocity of the airflow is 5.33 cm/s, it is an airflow resistance of the filter is 17Pa or less.

The primary filter being employed will be at least any one of the a high-voltage electrostatic precipitator, negative ion generator, ozone generator, an oxidant generator, a filter which comprises activated carbon, photocatalytic material, or molecular sieve, zeolite materials which mixing one or more than one of type of materials in any proportion and shape. Furthermore, the primary filter is a set of filters that comprises with different functions.

Further, the first outlet and/or the second outlet also includes a movable block, by adjusting the angle and orientation activities of the movable blocks to regulate the operation the sizes, angles and orientations of the first air outlet and/or of the second air outlet, thereby further regulate the velocity of the first airflow. The increment of the first airflow can increase the different of air pressure between the first chamber and the second chamber, which eventually increase the negative air pressure value of the second chamber (the negative air pressure region), more air will then entering to the second air chamber for purification. Further, this method is employed to regulate the velocity of airflow entering into the primary filter.

The air purifying device further comprises the central processing unit.

Wherein an air purifying device further comprises one or more environmental sensors, environmental sensors is used to measure at least of the: temperature, relative humidity, volatile organic compounds formaldehyde, carbon dioxide, carbon monoxide, dust, ozone, nitrogen oxides, bacteria, radon, wind speed, air flow, pressure, ambient light, noise level.

All regulation when done by electronic control automatically, the judgment to regulate will be according to data obtained by the environmental sensor data, or through the computer program which is being embedded in the central processor beforehand.

Further, the air purifying device further employs the connection with a motor or a hinge, with a shutter to switch and to cover a whole or major part of the filter, thereby to control the amount and flow rate of the second airflow to go into the primary filter.

Further, the shutter and the primary filter is combined to form a same part (hereinafter referred to as "filter valve"). Opening or closing the filter valve control the airflow path of the air.

All in all, the air purifying device comprise:

At least one first chamber, the first chamber comprises at least one air inlet (hereinafter referred to as " the first air inlet") and at least one air outlet (hereinafter referred to as "the first air outlet"), the first air outlet is located in the any location downstream of said first chamber; and at least one second chamber, the second chamber includes at least one air inlet (hereinafter referred to as "the second air inlet") and said at least one air outlet (hereinafter referred to as the "the second outlet"), the second air inlet is disposed within the first chamber inside, and it is located between the first air inlet and the first outlet, the second air inlet directly draw the air from the first chamber; the second air outlet disposed adjacent to the first air outlet or slightly upstream, of a position abutting to the first air outlet; and at least one filter (hereinafter referred to as "the primary filter)"; the primary filter is placed within the second chamber, and purify all the air enters to the second chamber.

When the air within the air purifying device is driven from upstream to downstream position, the flow of the air stream (called "first airflow") enter into the first chamber from the first air inlet, and then discharged from the first air outlet. When the first airflow discharged from the first air outlet, the air outlet adjacent to the first air outlet, or at air at the position which is slightly upfront (slightly upstream) abutting to the first air outlet, i.e., the air around the second air outlet, is in traction by and be discharged with the first airflow, a negative air pressure region (hereinafter called "negative pressure area") is produced within the second chamber, the second airflow enters to the second chamber through the second air inlet, and this airflow is being purified by the primary filter.

The second chamber is also provided with at least one air inlet to draw in air directly from the outside of the first chamber (hereinafter referred to as "the third air inlet").

The air purifying device also comprise a by-pass mechanism for selecting the airflow to be drawn into the second chamber, if it will be all from the second air inlet, or all from the third air inlet, or in partial from the second air inlet and partial from the third air inlet.

The primary filter is located in at least one of the following positions: (1) the primary filter is located between the second air outlet with the second air inlet, and with the third into the air inlet, or (2) the air purifying device comprises at least two primary filters, the at least two primary filters are located at the second air inlet and at the third air inlet, all air incoming to and flowing out from second chamber (i.e. air discharged from the second air outlet) must go through the primary filter.

A partial of or the whole part of the primary filter further forming the second chamber, the air inlet side of the primary filter will be according to source of the airflow (from the first chamber or from the outside of the first chamber), be defined as the second air inlet or third air inlet. The support of the primary filtering materials formed a shape as an air outlet, and that will be regarded as the second air outlet.

The first outlet and the second outlet are a shaped as a gradually narrowing air outlet.

A partial portion of the housing outside of the first air outlet having a curve-shaped flowing line surface. When the airflow is exhausted from the first air outlet, the exhausted airflow passes by the curve-shaped flowing line surface, it will be attached to the wall of it while flowing. The pressure outside of the exhausted airflow (the atmospheric pressure) is higher in compared to the pressure at the within the airflow and the pressure of the airflow at the junction with the curve-shaped flowing line surface.

The air purifying device further comprises a flow deflector, the deflector is placed in the first chamber, when airflow is drawn to flow from the upstream to downstream, and the flow deflector guides the airflow to the direction of the first air outlet.

The flow deflector employs the high-voltage electrostatic precipitator having a function for dust removal to spate and adsorb the particulate pollutant from the first airflow.

At downstream position of the first air inlet, and upstream position of the second air inlet, A pre-filter is further comprised.

Or a nutshell, the air purifying device comprises:

At least one primary airflow system and at least one side airflow system;

he main airflow system comprises at least one first air inlet and at least one first air outlet, one first chamber located in the space between the first air inlet and the first air outlet, at least one fan blower to drive a first airflow flowing from the upstream position to the downstream position within the first chamber, from the first air inlet to the first air outlet, and be exhausted out from the first air outlet.

The side airflow system comprises at least one housing, at least one primary filter, at least one second air inlet, at least one second air outlet, and at least one second chamber, the primary filter is located within the housing, the second air inlet being located at the most upstream of the housing, the second outlet located at the most downstream position of the housing. The primary filter is located at downstream position of the second air inlet. The void between the primary filter and the second air outlet is an enclosed room.

The second air outlet of the side airflow system is located adjacent to the first air outlet of the main airflow system, or slightly forward (slightly upstream) to the abutting position of the first air outlet.

The primary filter purify all air enter to the second chamber of the side airflow system, through the second air inlet.

When the air (first airflow) within the air purifying device is driven to flow from the upstream to the downstream, it flow from the first air inlet to the first chamber, and then be discharged from the first air outlet directly. When the first airflow is exhausted from the first air outlet, the air at the position which is adjacent to, or the air at the position which is slightly upfront (slightly upstream) abutting to the first air outlet, i.e., the air around the second air outlet, is in traction by and be discharged with the first airflow, a negative air pressure region is produced within the second chamber, the second airflow enters to the second chamber through the second air inlet, and this airflow is being purified by the primary filter.

The second airflow which being in traction by the first airflow and exhausted from second air outlet combined with the first airflow and be exhausted from the first air outlet.

The first airflow is discharged from the first air outlet of the electrical device. The air inlet of the electrical device is defined as the first air inlet; the air outlet of the electrical device is defined as the first air outlet; the air exhausted from the first air outlet is defined as the "main airflow" (i.e. the first airflow). The main airflow system is the electrical device comprise with a fan blower, the location of its first air outlet is located at a position which is adjacent to the second air outlet of the side airflow system. Further, the first air outlet in a position slightly upfront (slightly upstream) of the second outlet.

When the first airflow is discharged from the first air outlet of the electrical device, the air at the second air outlet also be in traction by the exhausting airflow, from the second air chamber, it will be exhausted out through the second air outlet. The second chamber becomes a negative air pressure region, the air with pollutant enter into the second chamber through the second air inlet, on passing through the primary filter, the second airflow is purified by the primary filter.

Further, the first outlet is in a shape which is as a gradually narrowing outlet,

When the main airflow system is an electrical device Further, when the electrical device is engaged with the side airflow system, the main airflow system further comprises at least one main airflow concentrator, which is a main stream concentrator is a device to collect and focus the first airflow. When the first airflow is discharged from the electrical device, it will first enters to the main stream concentrator, the main airflow concentration then converts and reorganize of the first airflow to a high-speed first airflow. The main stream concentrator comprises an air outlet which is in a shape of gradually narrowing.

Further, the side airflow system further comprises a hollow annular housing portion (circular ring form), and it is extended to the primary filter carrying portion. The air exhausted from the second airflow outlet, which is flowing out from the central the hollow annular housing portion. The hollow annular housing portion in a shape as an alphabet letter "o"; the hollow annular housing portion comprises an air outlet (which is the second airflow outlet) in annular "o" shape and the second chamber of the side airflow system. The "o" shaped second air outlet is located the circular ring of the hollow annular housing portion, the second chamber is majorly located with the hollow annular housing portion.

When the hollow annular housing portion of the side airflow system is engaged to operate with the main airflow system, the hollow annular housing portion (the second air outlet) surrounds a whole or a partial part of the first air outlet. When the first airflow is flow out from the main airflow system, it will pass by the central hollow region of the side airflow system. When the second airflow from the second air outlet is in traction and be exhausted by the first airflow, a better and more evenly distributed negative air pressure effect is formed within the second chamber. This negative air pressure effect is extended to the primary filter carrying portion. The second air flow enter from the second air inlet, pass through the primary filter, and be cleaned by the primary filter.

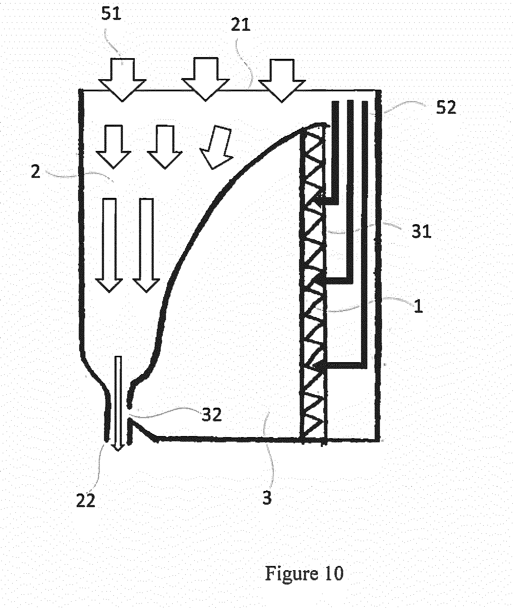

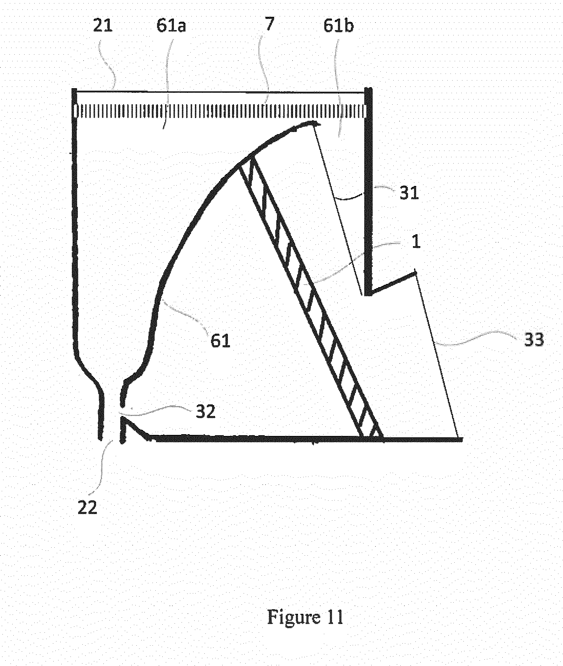

With the further integration on Figures 10 and 11, the above embodiment is described with some exemplary explanations. Referring to Figure 10, the air purifying device comprises a filter (hereinafter referred to as "the primary filter") 1, a first chamber 2, the first air inlet 21, a first air outlet 22; a second chamber 3, a second air inlet 31, a second air outlet 32, the primary filter 1 which is placed within the second chamber 2, the primary filter 1 is located at the second air inlet, and/or is located in between the second air outlet 32 with the second air inlet 31; all air which pass through the second air outlet 31 have to first pass through the primary filter 1, and be discharged from the second outlet 32; the second air inlet 31 is located within first chamber 2, and located between the first air inlet 21 of the first air outlet 22; said second outlet 32 is located adjacent to or slightly upfront (upstream), the abutting position at the first outlet 22.

The first outlet 22 and the second outlet 32 are respectively gradually narrowing shape air outlets.

Further, the first outlet 22 is an outlet that gives a venturi effect.

When the air within the air purifying device is driven to flow from upstream to downstream, the first airflow 51 flow to the first chamber 2 from the first air inlet 21, and then be discharged from the first outlet 22; when the first airflow 51 is being discharged from the first outlet 22, the air nearby the first outlet 22 or nearby the location which is adjacent to or slightly upfront to it, i.e., the air at the second air outlet 32, be in traction by the discharging first airflow 51, the second chamber 3 generates a negative air pressure region (hereinafter referred to as "the negative air pressure region"), resulting in a second air flow 52, the second airflow 52 flow from the first chamber 2 into the second air inlet 31, and therefore it flows through the primary filter 1, and the be discharged together by in traction with the primary airflow 51 flow, from the second outlet 32 it combined with the first air flow51, flows out of from the first air outlet 22.

Referring to Figure 11, the second chamber 3 also comprises at least one air inlet which can draw in air directly from the outside of the first chamber 2 (hereinafter named " the third air inlet") 33.

The primary filter 1 is placed in between the second air inlet 31 and the third air inlet 33 with the second air outlet 32; all air that enter to the second chamber 3 through the second air inlet 31, and/or the third air inlet 33 will pass through the primary filter 1, then being discharged from the second air outlet 32.

Further, the air purifying device further comprises a divider 61, the divider 61 substantially separate the first air outlet 22 and the second air outlet 31. The divider 61 is split the airflow into at least two portions 61a, 61b, wherein a portion of the air (i.e. the first airflow) 61a, without passing through the second air inlet 31, and the only access to the first air outlet 21. This can prevent the first airflow, when flow to the second air inlet 31 would be drawn into the second chamber 2 by the reason of the negative air pressure region is being created in the second chamber 2, which would other reduce the first airflow amount and velocity. The housing portion of the second chamber 2 form the divider 61. At a downstream position of the first air inlet 21 and the upstream position of the second air inlet 31, further comprise a pre-filter 7.

There are more implementation methods for the present invention, with the freely re-structure, the primary filter, the first and the second air inlets and outlets of the first and the second chamber, the position of the pre-filter, etc., as long as when the air in is flow the within the air purifying device, which is driven by the flow from upstream to downstream, the first air airflow flowing from the first air inlet into the first chamber, then be discharged directly from the first outlet; the first air flow when being discharged, making the air nearby the first outlet or nearby the location which is adjacent to or slightly upfront to it, i.e., the air at the second air outlet , be in traction by the discharging first airflow, generates a negative air pressure region in the second chamber, resulting in a second air flow 52 from any air inlet flow into the second chamber, and being purified by the primary filter, will fall into the scope of spirit of this invention.

As can be seen by the above description, the first chamber in the examples 10 and 11 can be understood as the space within the first airflow duct as described for the example 1 to 9, the second chamber in the examples 10 and 11 can be understood as the space within the second airflow duct as described for the example 1-9. As the second air outlet of the second chamber is disposed within the first chamber, the airflow in the main airflow system being regarded as the first airflow, the airflow in the side airflow system being regarded as the second airflow. The merging airflow of the first airflow and the second airflow will be regarded as the third airflow. The channel for this merged and discharged airflow can be regarded as the space in the common airflow duct as described for the example 1 to 9. The first air outlet can be regarded as the common airflow outlet.

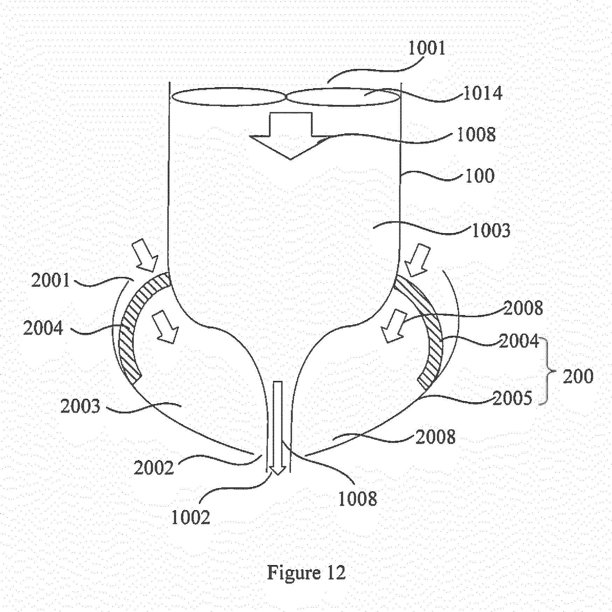

The following are some further integration in Figure 12 and Figure 11, describing the above-described variant embodiments with exemplary explained.

Referring to Figure 12, the air purifying device comprises a main airflow system 100, a side airflow system 200.

The main airflow system 100 includes at least one first air inlet 1001 and at least one first outlet 1002, the main airflow system 100 further comprise a first chamber 1003 which is located between the first air inlet 1001 and the first air outlet 1003, the first air outlet 1001 is located anywhere downstream of the first chamber 1003, at least one fan blower 1014 drive the first airflow, within the first chamber 1003, flowing from the upstream to the downstream, from the first air inlet 1001 to the first air outlet 1002, and be discharged at the first air outlet 1002.

The side airflow system 200 comprise at least one housing 2005 and at least one primary filter 2004, at least one second air inlet 2001 and at least one second air outlet 2002, at least one second chamber 2003; the primary filter 2004 is disposed within the housing 2005 of the side airflow system 200, the second air inlet 2001 located at the most upstream position of the housing 2005, the second outlet 2002 located at the most downstream position of the housing 2005. The primary filter 2004 is at the downstream position the second air inlet 2002, the second chamber 2003 is positioned between the second air outlet 2002 and the primary filter 2004;

The second air outlet 2002 of the side airflow system 200 is placed at the adjacent position, or a position slightly upfront (slightly upstream) of the first air outlet 1002 of the main airflow system 100.

The primary filter 2004 purifies all air enter through the second air inlet 2001 to the second chamber 2003.

When the air (first air flow) 1008 of the main airflow system 100 being driven by the fan blower 1014 to flow from the upstream to the downstream position, the first airflow 1008 flow from the first air inlet 1001 into the first chamber 1003, and then be discharged directly from the first air outlet 1002. When the first airflow 1008 is discharged from the first outlet 1002, the air at the position which is adjacent to, or the air at the position which is slightly upfront (slightly upstream) abutting to the first air outlet 1002, i.e., the air around the second air outlet 2002, also be regarded as the second airflow 2008, is in traction by and be discharged with the first airflow 1008, a negative air pressure region is produced within the second chamber 2003, the second airflow enters to the second chamber 2003 through the second air inlet 2001, and this airflow is being purified by the primary filter 2004

The first air outlet 1002 is a gradually narrowing shaped outlet.

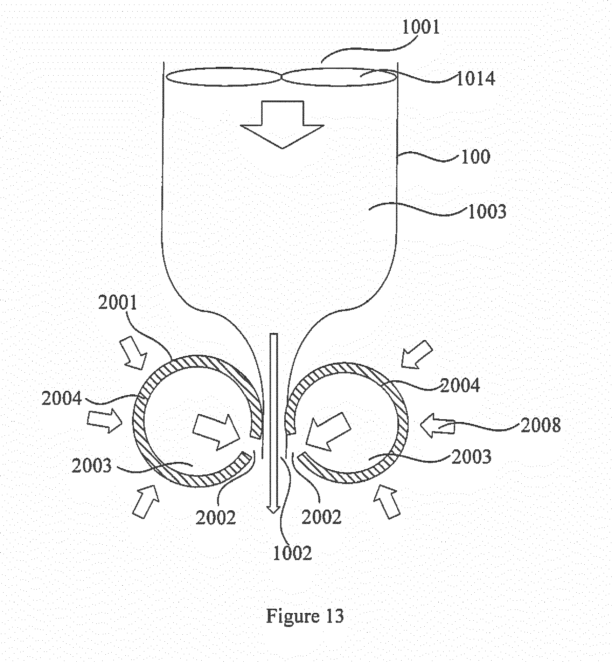

Referring to Figure 13, another specific embodiment of the present invention, its basic structure same with the embodiment described in figure 12, except that structure of the second chamber 2003 of the side airflow system is made from the a primary filter 2004, i.e. a second chamber 2003 of the side airflow system 200 is form from the primary filter 2004; the air inlet side of the primary filter 2004, is defined as a second air inlet 2001. The support of the primary filter 2004 materials formed the second chamber 2003 and also constitute as the shape as an air outlet, and that will be regarded as the second air outlet 2002.

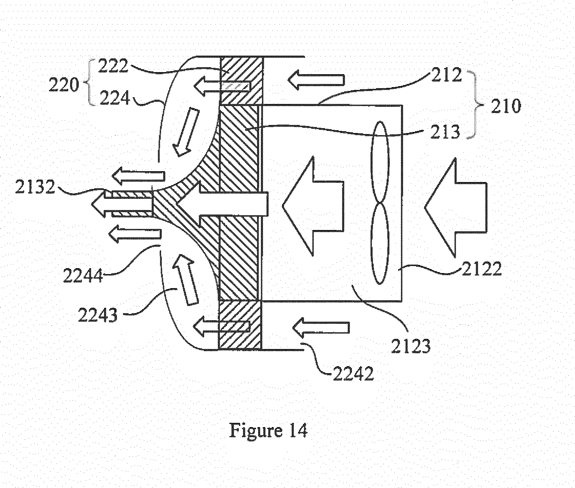

In the embodiment shown in figures 14 to 16, the air purifying device comprises a main airflow system 210 and the side airflow system 220. Main airflow system 210 includes a first housing 212 and main airflow concentrator 213. The outlet 2132 of the main airflow concentrator 213 is also the first air outlet 210 of the main airflow system 210. Main airflow concentrator 213 is placed within the first housing 212, at where close to the second outlet 2244, the main airflow concentrator 213 is gradually narrowing. The airflow from the first air outlet is converted and rectify by the main airflow concentrator 213 to a high-speed airflow. This enhanced the negative pressure at the first air outlet. Interior space of the first housing 212 to form the first chamber 2123, the first chamber2123 is located between the first air inlet2122 and the first air outlet. In another embodiment, the main airflow concentrator 213 maybe omitted, modifying the housing portion nearby of first air outlet to gradually narrowing type, can also achieve the purpose of converted and rectify the air from the first air outlet to a high-speed airflow.

The outside of the first air inlet 2122 is connected to an air movement devices, the air movement device 2122 drives the air to flow from the first air inlet to the first air outlet. If the outside of the first air inlet 2122 is connected to an air movement device, the main airflow system 210 which being shown in figure 14 can be omitted. The air movement devices may be electrical device having a fan, such as electric fans, dehumidifiers, humidifiers, air cooling device, air conditioners, heaters and the alike. The air movement device may be an air purifier. After the installation of the air purifying device of this embodiment, the air purifying effect by the original air purifier will be enhanced.

In the embodiment shown in Figure 14, the second air outlet 2244 and the main airflow concentrator 2244 form a final air outlet.

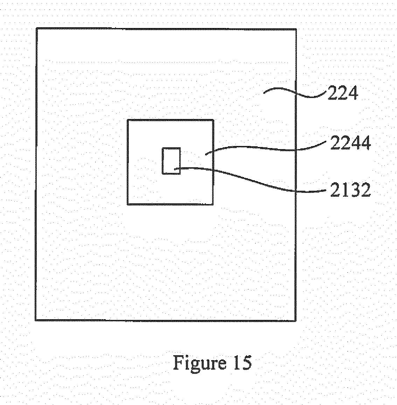

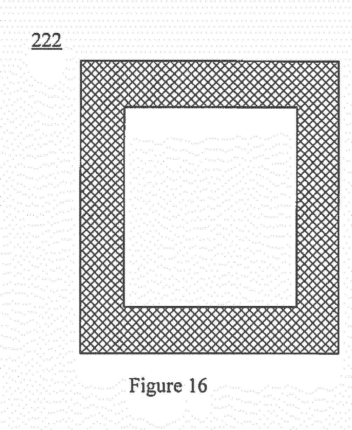

Side airflow system 220 surround the outer part of the main airflow system 210. The side airflow system 220 comprises a primary filter 222 and the second housing 224. The primary filter 222 is secured between the first housing 224 and second housing 212, a first housing 212, second housing 224 and the filter 222 forms a second chamber 2243. See also figure 15 and figure 16, the primary filter 222 is in annular form. The primary filter 222, the second housing 224 and the first housing 212 form a square shape. An opening is made at the second housing 224 to produce a second air outlet 2244; the second air outlet 2244 is near to the first air outlet 2132; the second air outlet 2244 is located adjacent to the first air outlet 2132, a second air outlet 2244 an also be located slightly upstream to a location adjacent to the first air outlet adjacent location 2132; the second air outlet 2244 would also surround the first air outlet 2132. When the air is discharged from the first air outlet 2132, the air at the second air outlet 2244 is pulled to flow and a venturi effect is occurred. A negative air pressure is generated in the second chamber 2243. The air out side of the primary filter 222 is oriented so it is facing toward the second air outlet 2244, and air is flown out of the side airflow system. As the negative air pressure is created within second chamber 2243. The air is drawn to flow into the side airflow system 220 from the second air inlet 2242 through the primary filter 222, and be discharged from the second air outlet 2244. The primary filter 222 clean the air which enters to the side airflow system 220.

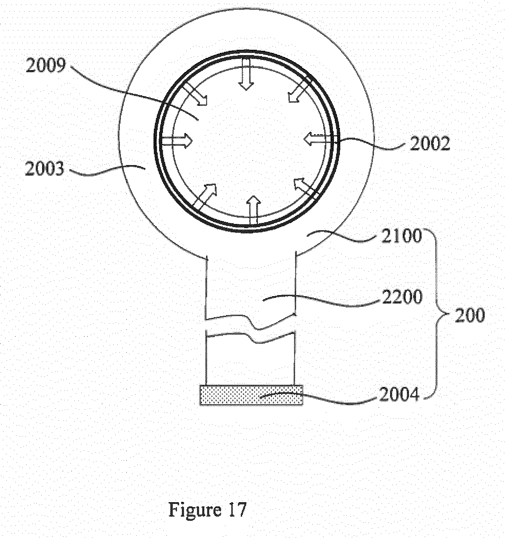

Figure 17 shows a side airflow system of an air purifying device in another embodiment of the present invention. The side airflow system 200 comprise a hollow annular housing portion 2100, and extending to primary filter carrying portion 2200, extending bearing part of the filter housing 2200 can also meet the need, the use of the flexible tube made of laryngeal structure. To meet the need, the primary filter carrying portion is forms by a flexible duct tubing, the hollow annular housing portion 2100 in a shape as an alphabet letter "o"; the hollow annular housing portion comprises an air outlet 2002 (which is the second airflow outlet) in annular "o" shape and the second chamber 2003 of the side airflow system. The "o" shaped second air outlet 2002 is located the circular ring of the hollow annular housing portion 2100, the second chamber 2003 is located within the hollow annular housing portion and the primary filter carrying portion 2200. The air exhausted from the second airflow outlet 2002, which is flowing out from the central 2009 the hollow annular housing portion.

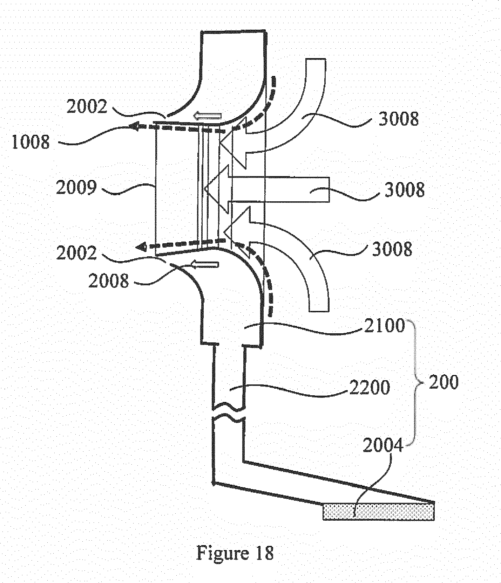

Referring to Figure 18, which the structure of it is basically the same as that shown in the Figure 17. Only the side view of the side airflow system of an air purifying device of one embodiment is illustrated. The second air outlet 2002 is having a shape which is gradually narrowing, or it is a nozzle type air outlet. The hollow annular housing portion 2100, comprises a curved shape portion, having the curvature at the side facing to the hollow circular core. When the second airflow 2008 is exhausted from the second air outlet 2002, it flows out from the void 2009 within hollow annular housing portion, a Coanda effect is created, the air outside the air purifying device, i.e., the air 3008 nearby the hollow annular housing portion will follow the second air flow, multiple the second airflow. This will result that the second airflow 2008, the primary airflow 1008, and the air 3008 outside the air purifying device (the air nearby the hollow annular housing portion) to flows through a central hollow part 2009 of the hollow annular housing portion together.

A hollow annular housing portion 2200 extends to primary filter carrying portion 2004. The primary filter is located at the primary filter carrying portion 2004. The shape of the primary filter has not relationship with the hollow annular housing portion 2200. The shape of the primary filter 2004 is a standard shaped filter.

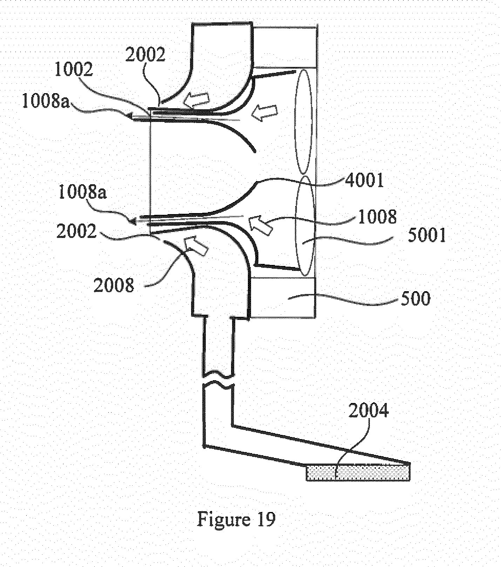

Referring figure 19, which the side airflow system 200 shown is structurally the same as that shown in the figure 18. The main airflow system 100 further comprise a main airflow concentrator 4001. When joining the main airflow concentrator 4001 with an electrical device 500, the main airflow concentrator 4001 collect and focus the first airflow means 1008. When the first airflow 1008 is discharged from the electrical device 500, it will first enter to the main stream concentrator 4001, the main airflow concentrator 1008 4001 convert and rectify the first airflow, it transforms the first airflow into a high-speed flow 1008a. The outlet of the main airflow concentrator 4001 is shaped as gradually narrowed first outlet 1002.

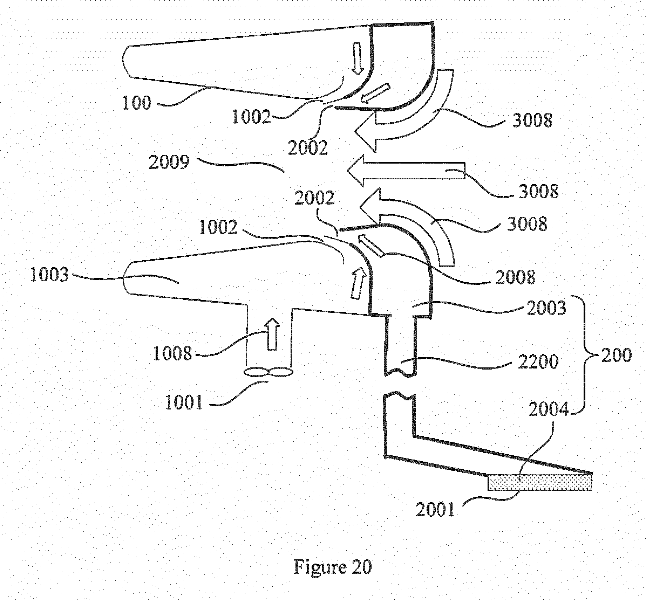

Referring figure 20, which the side airflow system 200 shown is structurally the same as that shown in the figures 18 and 19, except that the specific embodiment illustrates fitting together with a main airflow system 100. A partial or whole part of the first airflow outlet 1002 of main airflow system 100 embedded (or surround) the hollow annular housing portion 2009 (or the second air outlet 2002) of the side airflow system 200. When the first airflow 1008 is flow out from the main airflow system 100, it will pass by the central hollow region 2009 of the side airflow system. When the first airflow 1008 is exhausted from the first air outlet 1002 of the main airflow system 100, the air located at the second airflow outlet 2002, will be in traction and be exhausted by the first airflow 1008. It will exhausted out from the second chamber 2003 through the second air outlet 2002. A negative air pressure region is produced within the second chamber 2003, the second airflow 2008 with pollutants enters to the second chamber 2003 through the second air inlet 2001, and the second airflow 2008 is being purified by the primary filter 2004.

With this design, the second air outlet (the "o" shape air outlet) is evenly located at the circumference of hollow annular housing portion 2009. Therefore, when the airflow is in traction and be discharged from the second air outlet 2002 of the side airflow system 2008 by the main airflow 1008, a better and more evenly distributed negative air pressure effect is formed within the second chamber 2003. This negative air pressure effect is extended to the primary filter carrying portion 2200. The side airflow 2008 is then effectively enter to the second air inlet 2001, and pass through the primary filter 2004, and be cleaned by the primary filter 2004.

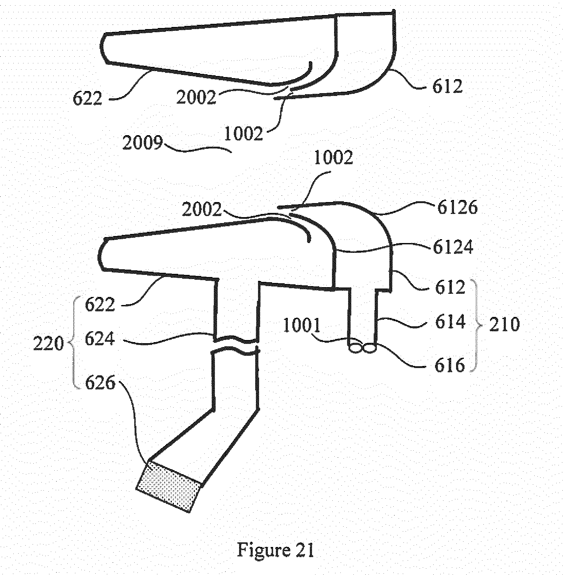

In one embodiment, as shown in the Figure 21, the position of the main airflow system and the side airflow system is different from that shown in the Figure 20. In this embodiment, the hollow annular housing portion of the second air outlet 2002 of the side airflow system 220 embedded (or surround) of the first air outlet 1002 of the first airflow system 210.

The main air flow system 210 comprises a first housing 612, a first air inlet structure 614 and a fan blower 616. The first housing 612 comprises an annular hollow housing portion, the interior space of that portion of the first housing 612 is an annular cavity, and the cavity is in circle shaped. The first housing 612 comprises a first sidewall 6124 and a second sidewall 6126 which are opposite to each other. The first sidewall 6124 and the second sidewall 6126 are curving gradually toward each other, they are getting close at one end. The second sidewall 6126 is located close to the annular hollow housing portion of the first housing 612. The first air inlet 1001 is located on the first inlet structure 614, a first air outlet 1002 is at the slit which is formed between the first sidewall 6124 and the second sidewall. The first air outlet 1002 is a gradually narrowed shaped outlet. It is a nozzle type air outlet. The air inlet 1001 is located at one terminal of the first inlet structure 614. The fan blower 616 is located at the first air inlet 1001 or somewhere within the first air inlet structure 614.

The annular hollow housing portion of the first housing 612 is in a shape of the letters "o". The first outlet 1002 also in the shape of the letters "o" word. The first air outlet 1002 is located at the annular hollow housing portion 2009 of the first housing 612. The inner cavity of first air inlet structure 614 connect to the inner cavity of the first housing 612 and the inner cavity of the fan blower 616. A first inlet structure 614 may be any shape, and a first inlet structure 614 may be in any form to extend to the first housing 612, the shape of the first housing 612 of the fan blower 616 have not limiting specifications.

Side airflow system 220 includes a second housing 622, a second inlet structure 624 and a primary filter 626. The second housing 622 comprises an annular hollow ring. The first housing 612 and second housing 622 are juxtaposed. The second inlet structure 624 is internally connected to the second housing 622 and the primary filter 626. The second outlet 2002 is located on the second housing 622. The second outlet 2002 is gradually narrowing shaped outlet. The second outlet embedded or surrounded a partial or the whole part of the first air outlet 1002. The second outlet 2002 is located near to the first outlet 1002.

The fan blower 616 drives the air to flow to and be discharged from the first air outlet 1002 from within the first housing 612. The air at the second air outlet 2002 be towed by the exhausting air at the first air outlet 1002, from the second casing 622, it is discharged from the second air outlet 2002. A negative air pressure region is created, the air to be purified being sucked through the primary filter 626, the purified air pass through the second inlet structure 624, the second housing 622 and be exhausted through the second air outlet 2002.

The first housing 612 where it is adjacent to the second air outlet 2002 612, it is a smooth surface. When the air is discharged from the first air outlet 1002 and a second air outlet 2002, the exhausting air will drive the air which is nearby the air purifying device, to flow together on the smooth surface. The air flow out from the first air outlet 1002 and the second air outlet 2002, which is around the central of the annular hollow portion 2009 when it is being exhausted, will creates a Coanda effect. This will pull the air outside air purifying device, namely, the air nearby the first housing 612, together with the air exhausted from the first air outlet 1002 and the second air outlet 2002 to flow together. This will increasing the amount of the airflow. The air exhausted from the first air outlet 1002 and the second air outlet 2002, and the air nearby the air purifying device (near the annular hollow portion first housing 612) will flow through together that central hollow parts.

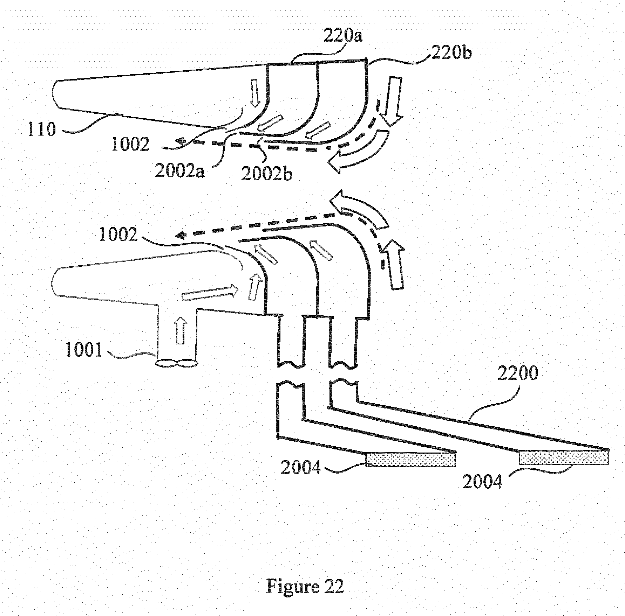

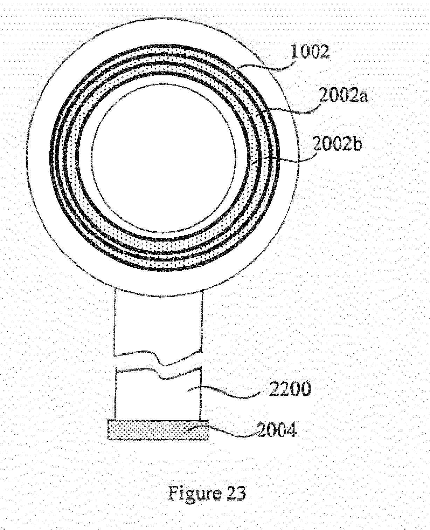

Seeing the figure 22 and 23 in one embodiment where two side airflow system is put together, a first sidewall of one side airflow system 220 is coincide with the second sidewall of the juxtaposed adjacent side airflow system220a. In other embodiment, a plurality of parallel side air flow system 220 may also be provided. In such case, the first sidewall of one side airflow system 220 is coincide with the second sidewall of the juxtaposed adjacent side airflow system 220, or the second sidewall of one side airflow system 220 is coincide with the first sidewall of the juxtaposed adjacent side airflow system 220.

At different side airflow system 220, filter 2004 with different purification function, different purification categories and for treating different concentrations of pollutants may be employed. The air passes through the filter 2004 of different side air flow system 220 may be come from different sources of gas. The position of the air inlet of the side airflow system 220 defined the region of air that can pass through the filter 2004, a targeted air purification can then be carried out. The locations of air inlet of the side airflow systems 220, can be flexibly adjusted manually or electrical, according to the site environment per air purification needs, or concentration of pollutants or sources. In one embodiment, the housing portion of the primary filter carrying portion 2200 can adopt to be curved, with flexible materials and structures as needed. The housing portion of the primary filter carrying portion 2200 may be a tubular housing, the primary filter carrying portion 2200 can be extended or shortened. It can also be moved with flexibility.

As shown in Figure 23, the first outlet 1002 surrounded a plurality of second air outlet 2002a, 2002b. The main airflow system 110 can simultaneously drive a plurality of side airflow system 220. In this embodiment, the main airflow system 110 and the plurality of side airflow system 220 are juxtaposed, and the main airflow system 210 is located at one end. In other embodiments, the main airflow system 110 may be sandwiched in between a pluralities of side airflow system 220.

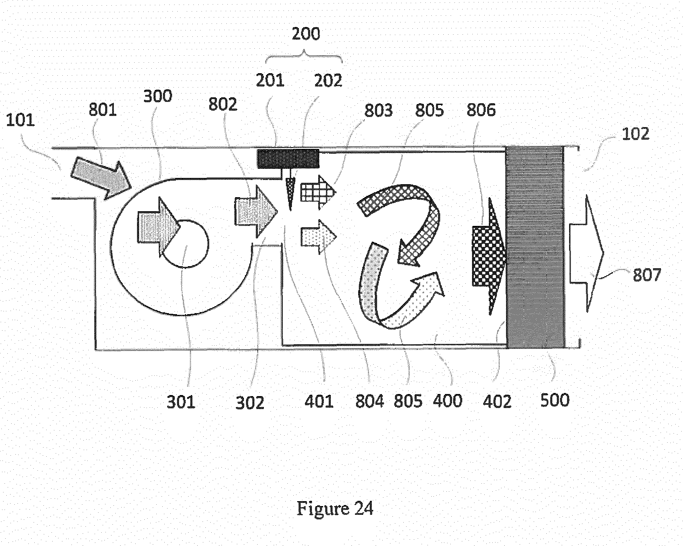

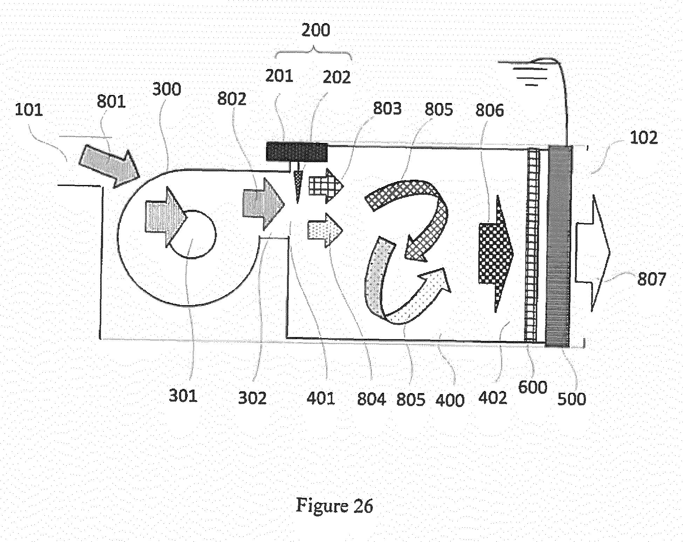

As a further improvement of the present invention, in an air purifying device comprises an ion generator, for example, as shown in Figure 3, Figure 6 and Figure 8a. The ion releasing tip of the ion generator will is placed non-uniformly in the path of the airflow, that makes only a partial portion of the airflow contains ionized air and/or containing the charged particulates, but not the whole portion of airflow become ionized air and/or containing the charged particulates The following figures 24 to 28 below describes the further improvements.

Refer to the Figure 24, the air purifying device comprises a fan blower 300, an ion generator 200, an air mixing space 400 and an air purifying component 500. In this embodiment, the air purifying component 500 is a filter 500. The air purifying device is comprises an air outlet 102, an air inlet 10, a fan blower 300, wherein the fan blower 300 comprises a fan air outlet 302 and an air inlet 301. The fan inlet 301 draws in air which containing particulates. It is the air which are to be purified by the filter 801. The fan outlet 302 out the air that containing particulates. It is the air to be purified by the air filter 802. The fan blows the air from the upstream position to the downstream; the ion generator 200 comprises a electronic means 201 and an ion releasing tip 202; The filter 500 includes a filtering materials and a filtering frame. While purifying the air with the filter 500, the micro filter capture the particulates pollutants in the air. One end of the air mixing space 400 where the air is to be blown away, through the filter 500, this end is connected to the air outlet 101 of the air purifying device. Another end of the air mixing space 400 where the air to be blow, it is through the fan blower 300, this end is connected to the air inlet 101 of the air purifying device. The air inlet of the fan 301 also equipped with a pre-filter (pre-filter) for filter the bigger size dust particulates, and avoid the large size dust particulates pollutes or damages the fan blower.

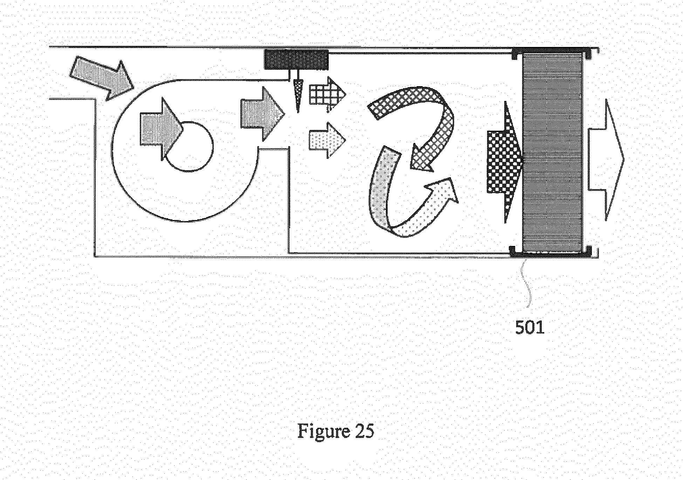

Air purifying device shown in Figure 25 is structurally same to that shown in the Figure 24, except that the filter frame is a metal frame 501.

Air purifying device shown in Figure 25 is structurally same to that shown in the Figure 24, except at a position slightly before the filter, installed with at least one metal ventilation grid or a electrical conductive frame 600, the electrical conducting frame 600 is connected to the ground wire of the electronic means 201 of the ion generator.

The embodiment shown in Figure 24- 26 the cases on where to place the ion releasing tip. If it is at the position of the fan outlet 302, and the location is close to one side of the cross section of the fan outlet 302, so when the fan blower 302 blowout the air 802 which contains the dust particulates and to be purified by the filter, only partial of the dust particulates 803 can pass through the ion releasing tip 202.

Wherein if the ion release tip 202 is disposed at the position at one end of the fan outlet 302, it is being placed closed to one side of the cross-section of the fan blower outlet, which the cross-section is a gradually enlarging one. More precisely, the ion releasing tip 202 is placing at one side of the cross-section where the airflow is flowing at the high-speed. After passing by the ion releasing tip 202, the airflow velocity is slowed down, so those portion of dust particulates 804, which did not pass through the ion releasing tip 202, will mix with those dust particulates 803 which had pass through the ion releasing tip 202. In the air mixing space, due to the slowed down of the airflows, the dust particulates collide with each other. They adsorbed together (as shown in Figure 805), integrated to larger dust particulates 806.

Wherein if the position of the ion releasing tip 202 is disposed at the air-mixing space 400, and it is in a position which is close to the fan outlet 302 and near to one side of the cross section of the fan outlet 302.

Wherein if the ion releasing tip 202 is disposed at the position within the air mixing space 400, the ion release tip 202 is still in a junction position of the airflows, where at this junction position, the airflow is changing from laminar flow to turbulent or turbulence flow 805; only partial of the layers of the laminar air flow which blow out by the fan air outlet 302 contains having the dust particulates become electrically charged 803. Those layers of the laminar air flow without passing through the ion releasing tip 202 will have the dust particulates 804 remains neutral charged. The charged particulates 803 and the neutral charged particulates 804, collide with each other and be adsorbed together onto each other in the air mixing space 400, when the airflow turning to turbulence or turbulent 805, they integrate together to form the larger size dust particulates 806, or form the integrated dust particulates cluster 806. The larger dust particulates 806, or dust particulates clusters 806, will become captured by the filter 500 after pass through the filter 500 with the airflow. The purified air 807 is eventually being discharged from the air outlet 102.

Above descriptions only targeting for the embodiments as illustrated in the examples of figures 24-26, that the air inlet 301 of the fan blower drawn in the air which are to be purified 801 and containing the dust particulates. The air outlet 302 of the fan blower blow out air which are to be purified 802 and containing the dust particulates. This can be understand that when applying the ion releasing tip 202 into the embodiments as illustrated in the figures 3 and 6, the fan blower can also draw in the air that contains no dust particulates, or the first airflow that does not require purification, or the second airflow which have not yet be purified by the air purifying component. The first airflow contains less particulate pollutants, when the partial of the first airflow passing through the ion releasing tip 202, the airflow will become an ionized airflow or and airflow contains charged particulates pollutants. This airflow further mix with the second airflow to form the third airflow.

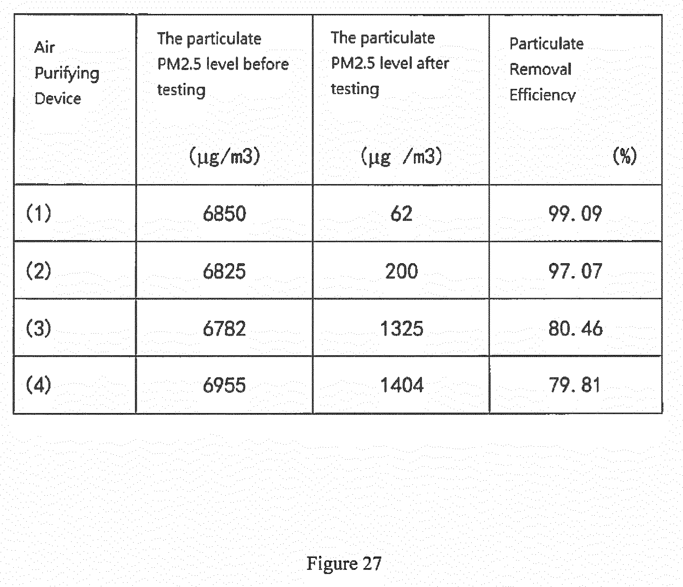

Figure 27 is a showing the experimental result on comparison the embodiments as illustrated in the Figure 24 and Figure 25 on the dust removal efficiency on the operating of the ion generator and without operating of the ion generator: (1) embodiment of figure 25 of operating of the ion generator, (2) embodiment figure 24 of operating of the ion generator, (3) embodiment of figure 25 of without operating of the ion generator, (4) embodiment of figure 24 of without operating of the ion generator. Its dust removal efficiency in descending order: (1)> (2)> (3), (4). Wherein, (1) has a more significant dust removal efficiency compare to (2), (3) and (4) have lower dust removal and similar efficiency. Thus it can be observed that the operation of the ionizer, and maintaining the filtering material to be neutrally charged (avoid the filter become charged), can effectively increase the dust removal efficiency.

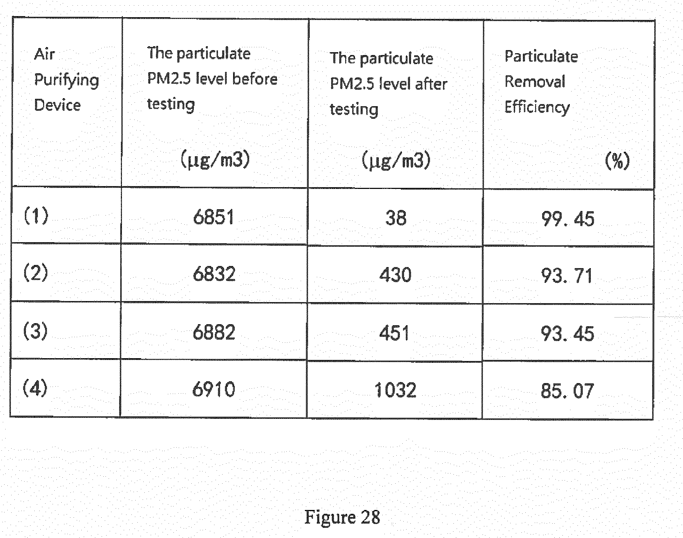

Figure 28 illustrates the experimental result on the comparison of the dust removal efficiency when placing the ion releasing tip of the ion generator at different locations. In this study, the following comparison on the air purifying devices: (1) Air purifying device of emboidment13; (2) Air purifying device of embodiment 13, where an ion releasing tip 202 is placed at the fan discharge outlet 302; (3)Air purifying device of embodiment 13, where the ion releasing tip 202 is placed in the middle of the fan air inlet 301 (4) Air purifying device of embodiment 13, where the ion releasing tip 202 is placed at the air outlet side of the filter. The dust removal efficiency in descending order are:

$$(1)> (2), (3)> (4)$$

Wherein, (1) has more significant dust removal efficiency when compare to (2) and (3), (2) and (3) have more significant dust removal efficiency when compare (4), the dust removal efficiency of (2) and (3) are similar. Thus, the place to put the ion releasing tip 202 of the present invention give significant impact on purification. This is because the air blow out from the fan blower air outlet 302 contain only partial of the dust particulates 803, which have pass through the ion releasing tip 202, become ionized. Those dust particulates 804 which did not pass through the ion releasing type 202 remain neutral charged. The charged particulates 803 and the neutral dust particulates 804, when mixing and collide (as illustrate in the arrow 805) together due to the turbulent airflow at the air mixing space 400. They will cluster together to larger size dust particulates 806, or become integrated dust particulates cluster 806. When flow through with the filter 500, the larger size dust particulates 806 or integrated dust particulates cluster 806 will be captured by the filter 500. Compare to the small size dust particulates, the chance of capturing dust particulates with increasing dust dimension is higher. Thus, air purification effect is therefore enhanced by this.

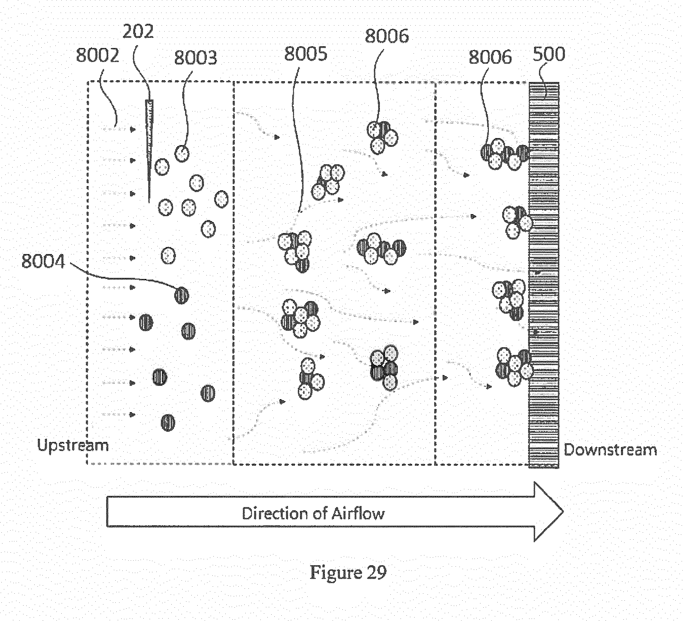

Figure 29 is illustrate a schematic diagram of the present invention on an air purifying method. The air purification method employed a fan blower 301 to drawn in and delivery the air which contains the dust particulates 804, that is the air 8002 which need to be purified by the filter 500. At the same time, the air is flowing from upstream to downstream. Wherein, the ion releasing tip 202 which is placed at one size of the fan blower outlet, or the ion releasing tip 202 which is placed non-uniformly within the air mixing space 400, only allow a partial of dust particulates 804 in the airflow 8002, which the airflow 8002 is the air to be purified by the filter 500 and being blown out from the fan outlet 301, become charge dust particulates 8003. Those dust particulates 804 in the airflow without pass through the ion releasing tip 202 will remain as neutrally charged particulates 8004. In the air mixing space 400, as the airflow is turning from laminar airflow to turbulence airflow 8005, the airflow collide with each other, the dust particulates integrate to larger size dust particulates 8006, or integrated dust particulates cluster 8006. The larger dust particulates 8006, or dust particulates clusters 806, will become captured by the filter 500 after pass through the filter 500 with the airflow. Compare to the smaller size dust particulates, the chance of capturing larger size dust particulates is higher as those dust particulates has a lager dimension. Thus, air purification effect is significant.

The above-described embodiment is merely the expression of several embodiments of the present invention. The description is more specific and detailed, but it cannot therefore be construed as the limitation to the scope of the invention patent. It should be noted that those of ordinary skill in the art, in the present invention without departing from the idea of the present invention, can also make a number of modifications and improvements, which would still be belonged to the scope of the present invention. Accordingly, the scope of the present invention patent protection shall be subject to the claims.

**Claims**

1. An air purifying device, comprises:

    at least one fan blower, the operation of the fan blower generates a first airflow;
    at least one first airflow duct, the first airflow duct having a first air inlet, the first airflow in the first airflow duct flows from upstream to downstream;
    at least one second airflow duct, the second airflow duct having a second air inlet, the second airflow flows from the upstream position to the downstream position at the second airflow duct;
    at one downstream position of the second airflow duct, the second airflow duct and first airflow duct merge together; the first airflow is flowing through the merging point of the of the first airflow duct and the second airflow duct, a negative pressure region in the second airflow duct is created; this makes the second airflow to be flown out from the second airflow duct and combines with the first airflow and forms a third airflow; and
    at least one air purifying component being disposed at second airflow duct, and / or the airflow path of the third airflow, purifying the second airflow and/or the third airflow.

2. An air purifying device according to claim 1, **characterized in that** the first airflow duct and the second airflow duct located at the upstream of the position of the air purifying device, the air from different sources are independently being drawn into the first airflow duct and the second airflow duct through the first air inlet and the second air inlet, as the first airflow and the second airflow.

3. An air purifying device according to claim 1, **characterized in that** the temperature of the first airflow is lower than the temperature of the second airflow.

4. An air purifying device according to claim 1, **characterized in that** the first airflow compare to the second airflow, has a levels of particulates phase and/or gases phase pollutants.

5. An air purifying device according to claim 1, **characterized in that** for the second airflow which contains the gases phase pollutants, a whole or a partial amount of the gases phase pollutants will be converted to or be condensed into particulates phase pollutant upon the drop of temperature.

6. An air purifying device according to claim 1, **characterized in that** the temperature of the airflow at the upstream position of the air purifying device is higher than that at the downstream positions.

7. An air purifying device according to claim 1, **char-**acterized in that** at least one common airflow duct is further comprised, the common airflow duct having a common air outlet, the common airflow duct located at the downstream position which is after the merging point of the first airflow duct and the second airflow duct, the third airflow flows within the common airflow duct, and being discharged out through the common air outlet.

8. An air purifying device according to claim 1, **characterized in that** the air purifying component is any one or more than one of the following components, to purifies or reduces for the levels of pollutants in the second airflow and/or the third airflow: high voltage electrostatic precipitator, a filter, a filter components, centrifugal device and cyclone.

9. An air purifying device according to claim 8, **characterized in that** the air purifying device further comprises a contaminant collection tank, the contaminant collection tank collects the larger dimension particulates phase pollutants which were formed from the condensation of the gases phase pollutant or tiny size particulate phase pollutant upon the dropping of the temperature.

10. An air purifying device according to claim 9, **characterized in that** the contaminant collection tank is disposed within the air purifying component.

11. An air purifying device according to claim 10, **characterized in that** the air purifying component comprises single or multiple units of cyclone separators in a series connection and air purifying component cooling device, the air purifying component cooling device which is disposed within the contaminant collection tank of the cyclone separator, it lower down the temperature of the airflow which entering into the contaminant collection tank, wherein fine particulates pollutants will be coagulated or be condensed at the lower temperature, and they are then collected by the contaminant collection tank of the cyclone separator.

12. An air purifying device according to claim 10, **characterized in that** the air purifying device comprise a single unit or multiple units of cyclones separator in a series connection, the connection method is that an air outlet of one cyclone is connected to an air inlet of another cyclone, wherein, the air inlet of the cyclone at the most upstream position and the air outlet of the cyclone at the most downstream position, or the air outlet of the cyclone at the most upstream position and the air inlet of the cyclone at the most downstream position, are connected to or being disposed at the second airflow duct, and/or the airflow path of the third airflow, that made the multiple units of cyclones in the series connection purify the second airflow and/or the third airflow.

13. An air purifying device according to claims 1 & 2, **characterized in that** the air purifying device further comprises at least one ultrasonic nebulizer and water reservoir tank, the ultrasonic nebulizer is placed within the water reservoir tank, when the ultrasonic nebulizer is in operation, atomized water vapor with lower temperature is generated; the atomized water vapor is introduced into and combine with the first airflow, or the second airflow which before it is flown into the air purifying component, or the third airflow before it flows into the air purifying component.

14. An air purifying device according to claims 1 & 2, **characterized in that** the air purifying device further comprises at least one pre-cooling device, the pre-cooling device is installed at any location upstream of the air purifying component and downstream of the second airflow inlet.

15. An air purifying device according to claim 14, **characterized in that** the pre-cooling device is a thermoelectric cooling module, or a semiconductor type cooling chip, or a water condenser.

16. An air purifying device according to claims 1 & 2, **characterized in that** at least one air purifying component cooling device is further comprised, the air purifying component cooling device surrounds the air purifying component, when the air is flown through the air purifying component, and the temperature of the airflow is decreased.

17. An air purifying device according to claim 16, **characterized in that** the air purifying component cooling device is a thermoelectric cooling module, or a semiconductor type cooling chip, or a water condenser.

18. An air purifying device according to claim 16, **characterized in that** the second air inlet is connected to a range hood connected to the second air inlet, the range hood concentrates to draw in the second airflow, which is to be purified into the second air inlet.

19. An air purifying device according to claim 2, **characterized in that** an ion generator is further comprised, the ion generator comprises an electronic means and an ion releasing tip, the ion releasing tip is placed upstream of the air purifying component.

20. An air purifying device according to claim 19, **characterized in that** the air purifying device comprises a single unit of cyclone separator or multiple units of cyclone separators in series connection, the ion releasing tip is placed at the upstream position of the contaminant collection tank of the cyclone separator.

21. An air purifying device according to claim 19, **characterized in that** the air purifying component further comprises an ultrasonic nebulizer and water reservoir tank, the ultrasonic nebulizer is placed with the water reservoir tank, the ion releasing tip is placed at the downstream position of the ultrasonic nebulizer and the water reservoir tank, and at the upstream position of the air purifying component; when the ultrasonic nebulizer is in operation, the atomized water vapor of lower temperature will be created, the atomized water vapor combines with the first airflow, or combines with the second airflow prior to the entering of the air purifying component, or combines with the third airflow prior to the entering of the air purifying component, the particulate are charged before they enter into the air purifying component.

22. An air purifying device according to claim 19, **characterized in that** the ion releasing tip is placed in the path of the first airflow.

23. An air purifying device according to claim 22, **characterized in that** the ion releasing tip is placed non-uniformly in the path of the first airflow, making only a partial portion of the first airflow contains ionized air and/or containing the charged dust particles.

24. An air purifying device according to claim 23, **characterized in that** an air mixing space is further comprised, one end of the air mixing space connected with the air purifying component; another end of the air mixing space, connected with the first air inlet through the fan blower, the air mixing space is located at a position between the fan blower and the air purifying component.

25. An air purifying device according to claim 24, **characterized in that** the air purifying component is a filter component, a filter component comprises a filter frame and filtering materials, the upstream side of the filter frame is connected to an electrical conducting frame, the electrical conducting frame is connected to ground wire of the electronic means of the ion generator; or the filter frame of the filter component is a conductive frame.

26. An air purifying device according to claim 25, **characterized in that** the fan blower is installed at the upstream position of the ion releasing tip, the filter component is installed at the downstream position of the ion release tip.

27. An air purifying device according to claim 26, **characterized in that** the ion releasing tip is placed at the fan blower outlet, and closed to one side of that cross-section of the air outlet of the fan blower.

28. An air purifying device according to claim 26, **char-

**acterized in that** the ion releasing tip is placed within the air mixing space where it is a junction region of the laminar or turbulent airflow located within the air mixing space, and/or a junction region of the laminar or turbulent airflow located within the air mixing space.

29. An air purifying device according to claim 26, **characterized in that** the ion releasing tip is placed within the air mixing space, near to the adjacent side of the fan blower outlet, and closed to one side of that cross-section.

30. An air purifying device according to claim 1, **characterized in that** the first airflow duct forms a first chamber, the first airflow duct having a first air outlet, the first air outlet located at anywhere downstream of the first chamber;
the second airflow duct forms a second chamber, the second airflow duct has a second air outlet, the second air inlet located within the first chamber, and it is located between the first air inlet and the first air outlet, the second air inlet draw-in air directly from the first chamber;
the second air outlet is located at a position which is adjacent to the first air inlet, or slightly upstream of that adjacent positionl;
the air purifying component comprises at least one primary filter, the primary filter is placed within the second chamber, and purify of all air flow into the second chamber.

31. An air purifying device according to claim 30, **characterized in that** the second chamber is also equipped with at least one third air inlet, which can directly draw in air from the outside of the first chamber.

32. An air purifying device according to claim 31, **characterized in that** the air purifying device comprises a by-pass mechanism for selecting if airflow to be drawn into the second chamber will be all come from the second air inlet, or all come from the third air inlet, or in partially come from the second air inlet and partially come from the third air inlet.

33. An air purifying device according to claim 31, **characterized in that** the primary filter is placed in between the second air inlet and the third air inlet with the second air outlet; or there are at least two primary filters, placing at the second air inlet and the third air inlet respectively, all air that incoming to and effluence from the second chamber will pass through the primary filter.

34. An air purifying device according to claims 30 and 31, **characterized in that** a partial of or a whole of the primary filter forming the second chamber, the air inlet side of the primary filter will be according to where the airflow coming from, whether it is from the first chamber or from the outside of the first chamber, be defined as the second air inlet or third air inlet; the support of the filtering materials of the primary filter formed a shape as an air outlet, and that will be regarded as the second air outlet.

35. An air purifying device according to claims 30 and 31, **characterized in that** the air inlet side of the primary filter, relative to the direction of flow of the first airflow, forming an acute angle.

36. An air purifying device according to claims 30 and 31, **characterized in that** the air inlet side of the primary filter, parallel to the direction of flow of the first airflow.

37. An air purifying device according to claims 30 and 31, **characterized in that** the first outlet and the second outlet are a shaped as a gradually narrowing air outlet.

38. An air purifying device according to claims 30 and 31, **characterized in that** a partial portion of the housing outside of the first air outlet having a curve-shaped flowing line surface, this make when the airflow is exhausted from the first air outlet, the exhausted airflow passes by the curve-shaped flowing line surface, it will be attached to the wall of it while flowing, the pressure outside of the exhausted airflow is higher in compared to the pressure at the within the airflow and the pressure of the airflow at the junction with the curve-shaped flowing line surface.

39. An air purifying device according to claims 30 and 31, **characterized in that** a flow deflector is further comprised, the deflector is placed in the first chamber, when airflow is drawn to flow from the upstream to downstream, and the flow deflector guides the airflow to the direction of the first air outlet.

40. An air purifying device according to claim 39, **characterized in that** the flow deflector employs the high-voltage electrostatic precipitator having a function for dust removal.

41. An air purifying device according to claims 30 and 31, **characterized in that** a pre-filter is installed at downstream position of the first air inlet, and upstream position of the second air inlet.

42. An air purifying device according to claims 41, **characterized in that** the static pressure of the pre-filter is 120Pa or less.

43. An air purifying device according to claims 41, **characterized in that** the static pressure of the pre-filter is 40Pa or less.

**44.** An air purifying device according to claims 41, **characterized in that**, the first airflow duct forms a main airflow system, the main airflow system comprises a first air inlet and a first air outlet, the main airflow system further comprises a first chamber, which is defined by the void between the first air inlet and the first air outlet; the first air outlet is located at any position downstream of the first chamber; at least one fan blower is employed to drive a main airflow, being defined as a first airflow, flowing from the upstream position to the downstream position within the first chamber, from the first air inlet to the first air outlet, and be exhausted out from the first air outlet. the second airflow duct forms a side airflow system, the side airflow system comprises at least one housing, at least one second air inlet, at least one second air outlet, and at least one second chamber; the second air inlet being located at the most upstream of the housing, the second outlet located at the most downstream position of the housing;

the air purifying component comprises at least one primary filter, the primary filter is installed within the housing of the side airflow system, for purifying all the air which enters into the second chamber though the second air inlet, the primary filter is located at downstream position of the second air inlet, the second chamber is located at a position between the primary filter and the second air outlet;

the second air outlet of the side airflow system is located at a position which is adjacent to the first air outlet of the main airflow system, or slightly forward or slightly at a location upstream of the adjacent of the first air outlet.

**45.** An air purifying device according to claims 44, **characterized in that** the primary airflow system is an electrical device which contains fan, the air inlet of the electrical device is defined as the first air inlet, the air outlet of the electrical device is defined as the first air outlet, and the airflow exhausted from the first air outlet is defined as the first airflow.

**46.** An air purifying device according to claims 45, **characterized in that** the electrical device is an electrical fan, a dehumidifier, a humidifier, a cool machine, an air conditioner or a heater having a fan.

**47.** An air purifying device according to claims 45, **characterized in that** the main airflow system further comprises at least one main airflow concentrator, the airflow concentrator is a device to collects and concentrates the first airflow, when the first airflow is discharged from the electrical device, it will first flow into the airflow concentrator, the first airflow is converted and reforms to a high-speed first airflow.

**48.** An air purifying device according to claims 45, **characterized in that** the housing of the side airflow system comprises a hollow annular housing portion, and a primary filter carrying portion; the hollow annular housing portion further comprises the second air outlet, the second air outlet is a gradually narrowing shaped-type outlet, or a nozzle-type outlet.

**49.** An air purifying device according to claims 48, **characterized in that**, the hollow annular housing portion comprises a curved shape portion, having the curvature at the side facing to the hollow circular core, when the second airflow is exhausted from the second air outlet, the effluent flows out from the void within hollow annular housing portion, a Coanda effect is further created, towing the air outside the air purifying device, and those air nearby the hollow annular housing portion, to flows through a central hollow part of the hollow annular housing portion together with the second airflow.

**50.** An air purifying device according to claims 48, **characterized in that** the main airflow system comprises a hollow annular housing portion, is operated in coordination with the hollow annular housing portion of the second air flow system which the second air outlet surrounds a whole or a partial part of the first air outlet; or the first air outlet surrounds a whole or a partial part of the second air outlet; when the first airflow is exhausted from the first air outlet, it will pass by the central hollow part of the hollow annular portion of the second airflow system.

**51.** An air purifying device according to claims 50, **characterized in that** there are two or more than two side airflow systems.

**52.** An air purifying device according to claims 47, **characterized in that** the primary filter carrying portion is forms by a flexible duct tubing, the position of the second air inlet, can be extended to or shortened, or transferred for a different orientation.

**53.** An air purifying device according to claims 52, **characterized in that** the shape of the primary filter is a standard shaped filter.

**54.** An air purifying device according to claims 53, **characterized in that** at a face velocity of the airflow is 5.33 cm/s, it is an airflow resistance of the filter is 40Pa or more.

**55.** An air purifying device according to claims 53, **characterized in that** at a face velocity of the airflow is 5.33 cm/s, it is an airflow resistance of the filter is 25Pa or more.

**56.** An air purifying device according to claims 53, **char-**

**acterized in that** at a face velocity of the airflow is 5.33 cm/s, it is an airflow resistance of the filter is 17Pa or more.

57. An air purifying method employing the air purifying device according to claim 1, wherein the first airflow being drawn in and flow through the first airflow duct by a fan blower; when the first airflow flowing within the first air flow duct, it passes by a merging point where the first and the second airflow ducts were joined together, a negative pressure region is then induced at the second airflow duct; the second airflow is further induced and it is drawn to flow out from the second airflow duct, to merge with the first airflow, forming a third airflow. An air purifying component is equipped at the second airflow duct, and/or the airflow path of the third airflow, to purify the second airflow and/or the third airflow.

58. An air purifying method according to claim 57, wherein with the non-uniform arrangement of the ion generator within the first airflow duct, only partial of the airflow becomes ionized and/or contains charged particulates.

Figure 1

Figure 2

Figure 3

Figure 4

Figure 5

Figure 6a

Figure 6b

| | | | |
|---|---|---|---|
| ⇨ | 711 | ⋮⋮ | 750 |
| ➡ | 721 | ≡ | 760 |
| ⇨ | 731 | ‖‖ | 770 |

70A

70B

70C

70D

Figure 7

Figure 8a

Figure 8b

911

921

931

950

960

970

Figure 9

Figure 10

Figure 11

Figure 12

Figure 13

Figure 14

Figure 15

222

Figure 16

Figure 17

Figure 18

Figure 19

Figure 20

622    2002    612

2009    1002

1002

2002    6126

6124

622    612

220    624    1001    614    210

626    616

Figure 21

Figure 22

Figure 23

200

201    202

300          802        803   805   806

801                                                        102

101

807

301      302      401  804 805 400   402   500

Figure 24

501

Figure 25

Figure 26

| Air Purifying Device | The particulate PM2.5 level before testing (μg/m3) | The particulate PM2.5 level after testing (μg /m3) | Particulate Removal Efficiency (%) |
|---|---|---|---|
| (1) | 6850 | 62 | 99. 09 |
| (2) | 6825 | 200 | 97. 07 |
| (3) | 6782 | 1325 | 80. 46 |
| (4) | 6955 | 1404 | 79. 81 |

Figure 27

| Air Purifying Device | The particulate PM2.5 level before testing (μg/m3) | The particulate PM2.5 level after testing (μg/m3) | Particulate Removal Efficiency (%) |
|---|---|---|---|
| (1) | 6851 | 38 | 99. 45 |
| (2) | 6832 | 430 | 93. 71 |
| (3) | 6882 | 451 | 93. 45 |
| (4) | 6910 | 1032 | 85. 07 |

Figure 28

Figure 29

# INTERNATIONAL SEARCH REPORT

| International application No. |
|---|
| **PCT/CN2014/092242** |

### A. CLASSIFICATION OF SUBJECT MATTER

B01D 46/00 (2006.01) i; B01D 50/00 (2006.01) i; F24F 13/28 (2006.01) i; F24F 1/02 (2011.01) i; F24F 3/16 (2006.01) i; A61L 9/22 (2006.01) i

According to International Patent Classification (IPC) or to both national classification and IPC

### B. FIELDS SEARCHED

Minimum documentation searched (classification system followed by classification symbols)

B01D 46, B01D 50, F24F 1, F24F 3, F24F 13, A61L 9

Documentation searched other than minimum documentation to the extent that such documents are included in the fields searched

Electronic data base consulted during the international search (name of data base and, where practicable, search terms used)

CNPAT, CNKI, WPI, EPODOC: LUO, Ruizhen; CHEN, Yaowei; AKOS, pump, confluence, merge, oil fume, SUCT+, VACUUM, UNDERPRESS+, NEGATIVE, BRANCH, MIX+, FILTER+, FILTRAT+, AIR, PURIF+, CLEAN+

### C. DOCUMENTS CONSIDERED TO BE RELEVANT

| Category* | Citation of document, with indication, where appropriate, of the relevant passages | Relevant to claim No. |
|---|---|---|
| X | CN 102784524 A (AKOS ENTERPRISE LIMITED), 21 November 2012 (21.11.2012), claims 1-40, description, paragraphs [0007]-[0129] and [0189]-[0227], and figures 1-54 | 1-58 |
| X | US 3877908 A (HAROLD PHELPS INC.), 15 April 1975 (15.04.1975), claims 1-19, description, column 2, line 57 to column 8, line 10, and figures 1-10 | 1-58 |
| A | US 6248146 B1 (WILLKE, H.L.), 19 June 2001 (19.06.2001), claims 1-12, description, column 1, line 47 to column 4, line 8, and figures 1-4 | 1-58 |
| A | CN 1712826 A (LG ELECTRONICS INC.), 28 December 2005 (28.12.2005), claims 1-20, and figure 2 | 1-58 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 February 2015 (13.02.2015) | **10 March 2015 (10.03.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LIU, Tianzuo** Telephone No.: (86-10) **62084793** |
|---|---|

Form PCT/ISA/210 (second sheet) (July 2009)

## INTERNATIONAL SEARCH REPORT
### Information on patent family members

| International application No. |
| --- |
| **PCT/CN2014/092242** |

| Patent Documents referred in the Report | Publication Date | Patent Family | Publication Date |
| --- | --- | --- | --- |
| CN 102784524 A | 21 November 2012 | WO 2012159554 A1 | 29 November 2012 |
| | | CN 102784524 B | 10 December 2014 |
| | | JP 2014522472 A | 04 September 2014 |
| | | EP 2711643 A1 | 26 March 2014 |
| | | KR 20140015556 A | 06 February 2014 |
| US 3877908 A | 15 April 1975 | None | |
| US 6248146 B1 | 19 June 2001 | EP 1017472 A4 | 27 June 2001 |
| | | WO 9847600 A1 | 29 October 1998 |
| | | EP 1017472 A1 | 12 July 2000 |
| | | WO 9847600 A9 | 01 July 1999 |
| | | AU 7251098 A | 13 November 1998 |
| | | CA 2287358 A1 | 29 October 1998 |
| CN 1712826 A | 28 December 2005 | KR 100556432 B1 | 03 March 2006 |
| | | EP 1614972 A2 | 11 January 2006 |
| | | EP 1614972 A3 | 11 January 2012 |
| | | US 2005284114 A1 | 29 December 2005 |
| | | KR 20050122524 A | 29 December 2005 |

Form PCT/ISA/210 (patent family annex) (July 2009)